(19) Europäisches Patentamt / European Patent Office / Office européen des brevets

(11) **EP 2 558 523 B1**

(12) **EUROPEAN PATENT SPECIFICATION**

(45) Date of publication and mention of the grant of the patent:
**08.05.2019 Bulletin 2019/19**

(51) Int Cl.:
*C08K 3/36* (2006.01)    *H01B 3/44* (2006.01)
*H01B 9/00* (2006.01)

(21) Application number: **11706237.2**

(22) Date of filing: **01.03.2011**

(86) International application number:
**PCT/EP2011/053025**

(87) International publication number:
**WO 2011/128147 (20.10.2011 Gazette 2011/42)**

(54) **CROSSLINKABLE POLYMER COMPOSITION AND CABLE WITH ADVANTAGEOUS ELECTRICAL PROPERTIES**

VERNETZBARE POLYMERZUSAMMENSETZUNG UND KABEL MIT VORTEILHAFTEN ELEKTRISCHEN EIGENSCHAFTEN

COMPOSITION POLYMÈRE RÉTICULABLE ET CÂBLE AUX PROPRIÉTÉS ÉLECTRIQUES AVANTAGEUSES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.04.2010 EP 10159842**

(43) Date of publication of application:
**20.02.2013 Bulletin 2013/08**

(73) Proprietor: **Borealis AG**
**1220 Vienna (AT)**

(72) Inventors:
• **NILSSON, Ulf**
  **S-444 41 Stenungsund (SE)**
• **HAGSTRAND, Per-Ola**
  **S-444 46 Stenungsund (SE)**
• **ENGLUND, Villgot**
  **S-416 64 Göteborg (SE)**
• **RONGSHENG, Liu**
  **S-72348 Västerås (SE)**

(74) Representative: **Dehns**
  **St. Brides House**
  **10 Salisbury Square**
  **London EC4Y 8JD (GB)**

(56) References cited:
WO-A2-2006/081400    JP-A- 7 021 850
JP-A- 2006 291 022

**Description**

**Field of invention**

The invention relates to a use of a polymer composition for producing a layer of a direct current (DC) power cable, which is preferably crosslinkable and subsequently crosslinked, to a direct current (DC) power cable, which is preferably crosslinkable and subsequently crosslinked, to a preparation process of the cable, as well a subgroup of the polyolefin composition.

**Background art**

Polyolefins produced in a high pressure (HP) process are widely used in demanding polymer applications wherein the polymers must meet high mechanical and/or electrical requirements. For instance in power cable applications, particularly in medium voltage (MV) and especially in high voltage (HV) and extra high voltage (EHV) cable applications the electrical properties of the polymer composition has a significant importance. Furthermore, the electrical properties of importance may differ in different cable applications, as is the case between alternating current (AC) and direct current (DC) cable applications.

A typical power cable comprises a conductor surrounded, at least, by an inner semiconductive layer, an insulation layer and an outer semiconductive layer, in that order. The cables are commonly produced by extruding the layers on a conductor.

Crosslinking of cables

The polymer material in one or more of said layers is often crosslinked to improve e.g. heat and deformation resistance, creep properties, mechanical strength, chemical resistance and abrasion resistance of the polymer in the layer(s) of the cable. In crosslinking reaction of a polymer interpolymer crosslinks (bridges) are primarily formed. Crosslinking can be effected using e.g. a free radical generating compound. Free radical generating agent is typically incorporated to the layer material prior to the extrusion of the layer(s) on a conductor. After formation of the layered cable, the cable is then subjected to a crosslinking step to initiate the radical formation and thereby crosslinking reaction.

Peroxides are very commonly used as free radical generating compounds. The resulting decomposition products of peroxides may include volatile by-products which are often undesired, since e.g. may have a negative influence on the electrical properties of the cable. Therefore the volatile decomposition products such as methane are conventionally reduced to a minimum or removed after crosslinking and cooling step. Such removal step, generally known as a degassing step, is time and energy consuming causing extra costs.

Electrical conductivity

The DC electrical conductivity is an important material property e.g. for insulating materials for high voltage direct current (HV DC) cables. First of all, the strong temperature and electric field dependence of this property will influence the electric field. The second issue is the fact that heat will be generated inside the insulation by the electric leakage current flowing between the inner and outer semiconductive layers. This leakage current depends on the electric field and the electrical conductivity of the insulation. High conductivity of the insulating material can even lead to thermal runaway under high stress/high temperature conditions. The conductivity must therefore be sufficiently low to avoid thermal runaway.

Accordingly, in HV DC cables, the insulation is heated by the leakage current. For a specific cable design the heating is proportional to the insulation conductivity $\times$ (electrical field)$^2$. Thus, if the voltage is increased, far more heat will be generated.

WO2006081400 discloses a nanocomposite composition comprising a nanoparticle filler having a paticle size up to 100 nm. The composition can be used in an insulation layer of a power cable applications for tailoring thermal or electrical properties for preventing well known and undesired water treeing in the cable layer.

JP 7 021850 describes DC power cable insulators comprising spherical magnesium oxide particles and a polyethylene. JP 2006 291022 describes the use of surface-treated magnesium oxide particles with an average particle size of 200 nm or less as insulating compositions. WO2006/081400 describes nanocomposite materials in combination with polyolefins for use in cables. WO2006/089744 describes scorch-retarding polymer compositions comprising an unsaturated polyolefin and a crosslinking agent.

There are high demands to increase the voltage of a direct current DC power cable, and thus a continuous need to find alternative polymer compositions with reduced conductivity. Such polymer compositions should preferably also have good mechanical properties required for demanding power cable embodiments.

**Objects of the invention**

One of the objects of the present invention is to provide a use of a further polymer composition with advantageous electrical properties, i.a. low electrical conductivity, for producing a direct current (DC) cable layer. Also an independent subgroup of the polymer composition with advantageous electrical properties is provided.

Another object of the invention is to provide a direct current (DC) power cable, wherein at least one layer comprises said polymer composition with advantageous electrical properties, i.a. low electrical conductivity. Also a preparation process of the power cable is provided.

The invention and further objects and benefits thereof are described and defined in details below.

**Description of the invention**

The present invention provides a direct current (DC) power cable, comprising a conductor which is surrounded by at least an inner semiconductive layer, an insulation layer and an outer semiconductive layer, in that order, wherein at least the insulation layer, comprises, preferably consists of, a polymer composition comprising

    (a) a polyolefin;
    (b) an inorganic filler, and
    (c) a crosslinking agent,

wherein said polyolefin (a) is an unsaturated LDPE.

The invention also provides a cross-linked direct current (DC) power cable formed by crosslinking the direct current (DC) power cable as herein described.

Unexpectedly, when a polyolefin (a) is blended to an inorganic filler (b) the resulting polymer composition exhibits improved electrical properties compared to the electrical properties of the polyolefin (a) alone. Namely, the polymer composition of the invention has reduced, i.e. low, electrical conductivity. "Reduced" or "low" electrical conductivity as used herein interchangeably means that the value obtained from the DC conductivity method (1) or (2) as defined below under "Determination methods" is low, i.e. reduced. The low electrical conductivity (referred also as DC conductivity) is beneficial for minimising the undesired heat formation, e.g. in an insulation layer of a DC power cable.

Accordingly, the low electrical conductivity makes the polymer composition very desirable for DC power cable applications. The voltage applied to the power cable is direct (DC). A DC power cable is defined to be a DC cable transferring energy operating at any voltage level, typically operating at voltages higher than 1 kV. Moreover, the polymer composition is very advantageous layer material for a DC power cable, which can be e.g. a low voltage (LV), a medium voltage (MV), a high voltage (HV) or an extra high voltage (EHV) DC cable, which terms, as well known, indicate the level of operating voltage. The polymer composition is even more preferable layer material for a DC power cable operating at voltages higher than 36 kV, such as a HV DC cable. For HV DC cables the operating voltage is defined herein as the electric voltage between ground and the conductor of the high voltage cable.

Accordingly, the present invention is directed to a use of a polymer composition for producing an insulation layer of a direct current (DC) power cable comprising a conductor surrounded by at least an inner semiconductive layer, the insulation layer and an outer semiconductive layer, in that order, characterized in that the polymer composition comprises

    (a) a polyolefin;
    (b) an inorganic filler, and
    (c) a crosslinking agent,

wherein said polyolefin is an unsaturated LDPE.

The invention also provides use of a polymer composition for producing an insulation layer of a direct current (DC) power cable comprising a conductor surrounded by at least an inner semiconductive layer, the insulation layer and an outer semiconductive layer, in that order, characterised in that the polymer composition comprises

    (a) a polyolefin,
    (b) an inorganic filler, and
    (c) a crosslinking agent,

wherein said polyolefin is an unsaturated LDPE.

The invention also provides a process for producing a DC power cable which is preferably crosslinkable, wherein the process comprises the steps of

- applying on a conductor, preferably by (co)extrusion, an inner semiconductive layer comprising a first semiconductive composition, an insulation layer comprising an insulation composition and an outer semiconductive layer comprising a second semiconductive composition, in that order, wherein the insulation composition of the insulation layer comprises, preferably consists of, a polymer composition comprising

(a) a polyolefin,
(b) an inorganic filler, and
(c) a crosslinking agent,

wherein said polyolefin is an unsaturated LDPE.

The invention also provides a polymer composition comprising

(a) a polyolefin which is an unsaturated LDPE,
(b) an inorganic filler, and
(c) a peroxide in an amount of 0.1 to 34 mmol -O-O-/kg polymer composition.

Preferably the polymer composition is used in a layer of a HV DC power cable operating at voltages of 40 kV or higher, even at voltages of 50 kV or higher. More preferably, the polymer composition is used in a layer of a HV DC power cable operating at voltages of 60 kV or higher. The invention is also highly feasible in very demanding cable applications and can be used in a layer of a HV DC power cable operating at voltages higher than 70 kV. The upper limit is not limited. The practical upper limit can be up to 900 kV. The invention is advantageous for use in HV DC power cable applications operating from 75 to 400 kV, preferably 75 to 350 kV. The invention is also found to be advantageous even in demanding extra HV DC power cable applications operating 400 to 850 kV. HV DC power cable as used below or in claims means herein either HV DC power cable, preferably with operating at voltages as defined above, or extra high HV DC power cable, preferably with operating at voltages as defined above.

The polymer composition of the invention is referred herein below also shortly as "polymer composition". The polymer components thereof as defined above are also shortly referred herein as "polyolefin (a)" and, respectively, "inorganic filler (b)".

It is understood herein that the inorganic filler (b) and the amount thereof present in the polymer composition of the invention has an effect of reducing the conductivity of the polymer composition. Accordingly the polymer composition is differentiated from, and excludes, semiconductive polymer compositions, wherein the inorganic filler, like carbon black, is used in amounts which increase the conductivity, and thus reduce the resistivity, of the semiconductive composition.

The polymer composition can be thermoplastic, i.e. not crosslinked, or crosslinkable.

The polymer composition has preferably an electrical conductivity of 160 fS/m or less, preferably of 150 fS/m or less, more preferably of 140 fS/m or less, more preferably of 130 fS/m or less, more preferably of 120 fS/m or less, more preferably of 110 fS/m or less, more preferably of from 0.01 to 100 fS/m or less, more preferably of from 0.05 to 90 fS/m or less, when measured according to DC conductivity method (1) using a 1 mm thick plaque sample as described under "Determination Methods".

The polymer composition has preferably an electrical conductivity of 100 fS/m or less, more preferably of 90 fS/m or less, preferably of 0.01 to 80 fS/m, of 0.01 to 70 fS/m, more preferably of 0.05 to 60 fS/m, more preferably of 0.05 to 50 fS/m, more preferably of 0.05 to 45 fS/m, more preferably of 0.05 to 40 fS/m, more preferably of 0.05 to 30 fS/m more preferably of 0.05 to 20.0 fS/m, more preferably of 0.05 to 15.0 fS/m, more preferably of 0.05 to 10.0 fS/m, most preferably of 0.05 to 5.0 fS/m, when measured according to DC conductivity method (2).

Accordingly, the invention enables a reduction in the electrical conductivity of a polymer composition of a DC power cable, by producing an insulation layer using the polymer composition of the invention.

Preferably, the polymer composition comprises the polyolefin (a) in an amount of 70wt% or more, preferably of 80wt% or more, preferably from 85 to 99.95wt%, more preferably from 90.0 to 99.9wt%, more preferably from 95.0 to 99.9 wt%, more preferably from 96.0 to 99.9 wt%, based on the combined amount of the polyolefin (a) and the inorganic filler (b).

The polyolefin (a) can be a low density polyethylene (LDPE) polymer polymerised in a high pressure polymerisation process and in the presence of an initiator(s), more preferably an LDPE selected from an unsaturated LDPE homopolymer or an unsaturated LDPE copolymer of ethylene with one or more comonomer(s).

"Polyethylene polymerised in the presence of an olefin polymerisation catalyst" is also often called as "low pressure polyethylene" to distinguish it clearly from LDPE. Both expressions are well known in the polyolefin field. "Low density polyethylene", LDPE, is a polyethylene produced in a high pressure polymerization process. Typically the polymerization of ethylene and optional further comonomer(s) in the high pressure process is carried out in the presence of an initiator(s). The meaning of LDPE polymer is well known and documented in the literature.

The inorganic filler (b) can be any inorganic filler, preferably selected from conventional, e.g. commercially available, inorganic fillers usable for an insulation layer. The inorganic filler (b) is further described below under "Inorganic filler (b)".

The amount of inorganic filler (b) depends on the nature, e.g. density, of the filler. The principle is that inorganic filler (b) is present in an amount which reduces the electrical conductivity of the polymer composition compared to same composition but without the inorganic filler (b). To find such "DC conductivity reducing" amount is within the skills of a skilled person, and can be determined by using the DC conductivity methods as defined under "Determination methods".

Preferably, the amount of the inorganic filler (b) is of up to 30wt%, preferably of up to 20wt%, preferably from 0.05 to 15wt%, more preferably from 0.1 to 10.0wt%, more preferably from 0.1 to 5.0wt%, more preferably from 0.1 to 4.0wt%, based on the combined amount of the polyolefin (a) and the inorganic filler (b).

The amount of the inorganic filler (b) as defined above, below or in claims means the amount of a pure (= neat) inorganic filler compound as such, such as pure $SiO_2$.

The polyolefin (a) and the inorganic filler (b) and the further properties and preferable embodiments thereof are further described later below.

Preferably, the polymer composition of the invention is crosslinkable.

"Crosslinkable" means that the polymer composition can be crosslinked using a crosslinking agent(s) before the use in the end application thereof. Crosslinkable polymer composition further comprises a crosslinking agent. It is preferred that the polyolefin (a) of the polymer composition is crosslinked. Moreover, the crosslinked polymer composition or, respectively, the crosslinked polyolefin (a), is most preferably crosslinked via radical reaction with a free radical generating agent. The crosslinked polymer composition has a typical network, i.a. interpolymer crosslinks (bridges), as well known in the field. As evident for a skilled person, the crosslinked polymer composition can be and is defined herein with features that are present in the polymer composition or polyolefin (a) before or after the crosslinking, as stated or evident from the context. For instance the amount of the crosslinking agent in the polymer composition or a compositional property, such as MFR, density and/or unsaturation degree, of the polyolefin (a) are defined, unless otherwise stated, before crosslinking. "Crosslinked" means that the crosslinking step provides a further technical feature to the crosslinked polymer composition (product by process) which makes a further difference over prior art.

The Polymer composition has the beneficial low electrical conductivity also when it is crosslinked.

In embodiments, wherein the polymer composition is crosslinkable and comprises a crosslinking agent, then the electrical conductivity is measured from a sample of the crosslinked polymer composition (i.e. a sample of the polymer composition is first crosslinked with the crosslinking agent initially present is the polymer composition and then the electrical conductivity is measured from the obtained crosslinked sample). The conductivity measurement from a non-crosslinked or a crosslinked polymer composition sample is described under "Determination Methods". The amount of the crosslinking agent can vary, preferably within the ranges given below.

Surprisingly, the polymer composition, wherein the crosslinked polymer composition comprising polyolefin (a) is blended to the inorganic filler (b) has a reduced electrical conductivity compared to the electrical conductivity of a crosslinked polyolefin (a) alone.

The crosslinking contributes preferably also to the mechanical properties and the heat and deformation resistance of the polymer composition.

In case of a crosslinked polymer composition, the DC conductivity of the crosslinked polymer composition comprising an inorganic filler (b) is unexpectedly advantageously low after reducing or removing the volatile decomposition products of the crosslinking agent, known as a degassing step. Furthermore, the polymer composition comprising the inorganic filler (b) can be crosslinked with a lower peroxide content as defined above and such crosslinked polymer composition has still an advantageously low electrical conductivity after degassing. Accordingly, the prior art drawbacks relating to the use of a crosslinking agent in a cable layer can be minimised. Moreover, the used lower peroxide content can shorten the required degassing step of the produced and crosslinked cable, if desired.

Accordingly, the polymer composition comprises crosslinking agent, preferably a peroxide. The polymer composition preferably comprises peroxide in an amount of up to 110 mmol -O-O-/kg polymer composition, preferably of up to 90 mmol -O-O-/kg polymer composition, more preferably of 0 to 75 mmol -O-O-/kg polymer composition, preferably of less than 50 mmol -O-O-/kg polymer composition, preferably of less than 40 mmol -O-O-/kg polymer composition.

In a preferred embodiment the polymer composition comprises peroxide in an amount of less than 37 mmol -O-O-/kg polymer composition, preferably of less than 35 mmol -O-O-/kg polymer composition, preferably of 0.1 to 34 mmol -O-O-/kg polymer composition, preferably of 0.5 to 33 mmol -O-O-/kg polymer composition, more preferably from 5.0 to 30 mmol -O-O-/kg polymer composition, more preferably from 7.0 to 30 mmol -O-O-/kg polymer composition, more preferably from 10.0 to 30 mmol -O-O-/kg polymer composition.

The unit "mmol -O-O-/kg polymer composition" means herein the content (mmol) of peroxide functional groups per kg polymer composition, when measured from the polymer composition prior to crosslinking. For instance the 35 mmol -O-O-/kg polymer composition corresponds to 0.95 wt% of the well known dicumyl peroxide based on the total amount (100 wt%) of the polymer composition.

In one preferable embodiment the DC conductivity of the polymer composition is of 0.01 to 80 fS/m, more preferably of 0.01 to 70 fS/m, more preferably of 0.05 to 60 fS/m, more preferably of 0.05 to 50 fS/m, more preferably of 0.05 to 40 fS/m, more preferably of 0.05 to 30 fS/m, when measured according to DC conductivity method (1) using a 1 mm thick plaque sample as described under "Determination Methods". In this embodiment it is preferred that the polymer composition is crosslinkable and comprises, prior crosslinking, peroxide less than less than 50 mmol -O-O-/kg polymer composition, preferably of less than 40 mmol -O-O-/kg polymer composition, preferably of less than 37 mmol -O-O-/kg polymer composition, preferably of less than 35 mmol -O-O-/kg polymer composition.

If crosslinkable, then the polymer composition may comprise one type of peroxide or two or more different types of peroxide, in which case the amount (in mmol) of -O-O-/kg polymer composition, as defined above, below or in claims, is the sum of the amount of-O-O-/kg polymer composition of each peroxide type. As non-limiting examples of suitable organic peroxides, di-tert-amylperoxide, 2,5-di(tert-butylperoxy)-2,5-dimethyl-3-hexyne, 2,5-di(tert-butylperoxy)-2,5-dimethylhexane, tert-butylcumylperoxide, di(tert-butyl)peroxide, dicumylperoxide, butyl-4,4-bis(tert-butylperoxy)-valerate, 1,1-bis(tert-butylperoxy)-3,3,5-trimethylcyclohexane, tert-butylperoxybenzoate, dibenzoylperoxide, bis(tert butylperoxyisopropyl)benzene, 2,5-dimethyl-2,5-di(benzoylperoxy)hexane, 1,1-di(tert-butylperoxy)cyclohexane, 1,1-di(tert amylperoxy)cyclohexane, or any mixtures thereof, can be mentioned. Preferably, the peroxide is selected from 2,5-di(tert-butylperoxy)-2,5-dimethylhexane, di(tert-butylperoxyisopropyl)benzene, dicumylperoxide, tert-butylcumylperoxide, di(tert-butyl)peroxide, or mixtures thereof. Most preferably, the peroxide is dicumylperoxide.

Additionally, the polymer composition of the invention may contain, in addition to the polyolefin (a), inorganic filler (b) and the optional peroxide, further component(s) such as polymer component(s) and/or additive(s), preferably additive(s), such as any of antioxidant(s), scorch retarder(s) (SR), crosslinking booster(s), stabiliser(s), processing aid(s), flame retardant additive(s), water tree retardant additive(s), acid or ion scavenger(s), inorganic filler(s) and voltage stabilizer(s), as known in the polymer field. The polymer composition comprises preferably conventionally used additive(s) for W&C applications, such as one or more antioxidant(s) and optionally one or more of scorch retarder(s) or crosslinking booster(s), preferably at least one or more antioxidant(s). The used amounts of additives are conventional and well known to a skilled person.

As non-limiting examples of antioxidants e.g. sterically hindered or semi-hindered phenols, aromatic amines, aliphatic sterically hindered amines, organic phosphites or phosphonites, thio compounds, and mixtures thereof, can be mentioned.

The amount of polyolefin (a) in the polymer composition of the invention is typically of at least 35 wt%, preferably of at least 40 wt%, preferably of at least 50 wt%, preferably at least 75 wt%, more preferably from 80 to 100 wt% and more preferably from 85 to 100 wt%, of the total weight of the polymer component(s) present in the polymer composition. The preferred polymer composition consists of polyolefin (a) as the only polymer components. The expression means that the polymer composition does not contain further polymer components, but the polyolefin (a) as the sole polymer component. However, it is to be understood herein that the polymer composition may comprise further component(s) other than the polyolefin (a) component, such as additive(s) which may optionally be added in a mixture with a carrier polymer, i.e. in so called master batch. Also the inorganic filler can be added in form of a master batch. In such cases the carrier medium is not calculated to the amount of the polymer components.

The polymer composition, preferably the polyolefin (a), is unsaturated (contain carbon-carbon double bonds) before the optional crosslinking, as further described below under the polyolefin (a).

The invention also provides independently a subgroup of the direct current (DC) power cable, comprising a conductor which is surrounded by at least an inner semiconductive layer, an insulation layer and an outer semiconductive layer, in that order, wherein at least the insulation layer, comprises, preferably consists of, a polymer composition comprising

    (a) a polyolefin which is as defined as defined above, below or in claims,
    (b) an inorganic filler, and

a peroxide in an amount of less than 37 mmol -O-O-/kg polymer composition, preferably of less than 35 mmol -O-O-/kg polymer composition, preferably of 0.1 to 34 mmol -O-O-/kg polymer composition, preferably of 0.5 to 33 mmol -O-O-/kg polymer composition, more preferably from 5.0 to 30 mmol -O-O-/kg polymer composition, more preferably from 7.0 to 30 mmol -O-O-/kg polymer composition, more preferably from 10.0 to 30 mmol -O-O-/kg polymer composition; wherein said polyolefin (a) is an unsaturated LDPE.

This subgroup is preferably crosslinkable and, when crosslinked, provides highly reduced electrical conductivity. The subgroup of the direct current (DC) power cable is novel and preferred.

In this subgroup of the direct current (DC) power cable comprises the polyolefin (a), which is unsaturated, and the inorganic filler (b) in amounts as defined above or in claims.

This independent subgroup of the direct current (DC) power cable of the invention with a low electrical conductivity is very desirable for power cable applications in general. A power cable is defined to be a cable transferring energy operating at any voltage level, typically operating at voltage higher than 1 kV. The voltage applied to the power cable is direct (DC). The power cable is DC power cable as defined above, below or in claims.

The following preferable embodiments, properties and subgroups of the polyolefin (a) and the inorganic filler (b) components suitable for the polymer composition are independently generalisable so that they can be used in any order or combination to further define the preferable embodiments of the polymer composition and the cable produced using the polymer composition. Moreover, it is evident that the given description of the polyolefin (a) applies, unless otherwise stated, to the polyolefin (a) prior optional crosslinking.

Polyolefin (a)

Suitable polyolefins as the polyolefin (a) are e.g. as such well known and can be e.g. commercially available or can be prepared according to or analogously to known polymerization processes described in the chemical literature.

Accordingly, the polyolefin (a) is an unsaturated LDPE. Where herein it is referred to a "polymer", e.g. polyolefin, such as polyethylene, this is intended to mean both a homo- and copolymer, e.g. an ethylene homo- and copolymer. The polyolefin copolymer may contain one or more comonomer(s).

As well known "comonomer" refers to copolymerisable comonomer units.

In case a polyolefin (a) is a copolymer of ethylene with at least one comonomer, then suitable such other comonomer is selected from non-polar comonomer(s) or polar comonomers, or any mixtures thereof. Preferable other non-polar comonomers and polar comonomers are described below in relation to polyethylene produced in a high pressure process.

The polyethylene polymer as the polyolefin (a) is a polyethylene polymerised in a high pressure (HP) polymerisation process, preferably in the presence of an intiator(s).

According to an embodiment the polyolefin (a) is a low density polyethylene (LDPE) polymer produced in a high pressure (HP) polymerisation process, preferably in the presence of an initiator(s). It is to be noted that a polyethylene produced in a high pressure (HP) process is referred herein generally as LDPE and which term has a well known meaning in the polymer field. Although the term LDPE is an abbreviation for low density polyethylene, the term is understood not to limit the density range, but covers the LDPE-like HP polyethylenes with low, medium and higher densities. The term LDPE describes and distinguishes only the nature of HP polyethylene with typical features, such as high branching architecture, compared to the PE produced in the presence of an olefin polymerisation catalyst.

The preferred polyolefin (a) is an LDPE polymer which may be a low density homopolymer of ethylene (referred herein as LDPE homopolymer) or a low density copolymer of ethylene with one or more comonomer(s) (referred herein as LDPE copolymer). The one or more comonomers of LDPE copolymer are preferably selected from the polar comonomer(s), non-polar comonomer(s) or from a mixture of the polar comonomer(s) and non-polar comonomer(s), as defined above or below. Moreover, said LDPE homopolymer or LDPE copolymer as said polyolefin (a) may optionally be unsaturated.

As a polar comonomer for the LDPE copolymer as said polyolefin (a), comonomer(s) containing hydroxyl group(s), alkoxy group(s), carbonyl group(s), carboxyl group(s), ether group(s) or ester group(s), or a mixture thereof, can be used. More preferably, comonomer(s) containing carboxyl and/or ester group(s) are used as said polar comonomer. Still more preferably, the polar comonomer(s) of LDPE copolymer is selected from the groups of acrylate(s), methacrylate(s) or acetate(s), or any mixtures thereof. If present in said LDPE copolymer, the polar comonomer(s) is preferably selected from the group of alkyl acrylates, alkyl methacrylates or vinyl acetate, or a mixture thereof. Further preferably, if present, said polar comonomers are selected from $C_1$- to $C_6$-alkyl acrylates, $C_1$- to $C_6$-alkyl methacrylates or vinyl acetate. Still more preferably, said polar LDPE copolymer as the polyolefin (a) is a copolymer of ethylene with $C_1$- to $C_4$-alkyl acrylate, such as methyl, ethyl, propyl or butyl acrylate, or vinyl acetate, or any mixture thereof.

As the non-polar comonomer(s) for the LDPE copolymer as said polyolefin (a), comonomer(s) other than the above defined polar comonomers can be used. Preferably, the non-polar comonomers are other than comonomer(s) containing hydroxyl group(s), alkoxy group(s), carbonyl group(s), carboxyl group(s), ether group(s) or ester group(s). One group of preferable non-polar comonomer(s) comprise, preferably consist of, monounsaturated (= one double bond) comonomer(s), preferably olefins, preferably alpha-olefins, more preferably $C_3$ to $C_{10}$ alpha-olefins, such as propylene, 1-butene, 1-hexene, 4-methyl-1-pentene, styrene, 1-octene, 1-nonene; polyunsaturated (= more than one double bond) comonomer(s); a silane group containing comonomer(s); or any mixtures thereof. The polyunsaturated comonomer(s) are further described below in relation to unsaturated LDPE copolymers.

If the LDPE polymer is a copolymer, it preferably comprises 0.001 to 50 wt.-%, more preferably 0.05 to 40 wt.-%, still more preferably less than 35 wt.-%, still more preferably less than 30 wt.-%, more preferably less than 25 wt.-%, of one or more comonomer(s).

The LDPE polymer is unsaturated, i.e. the LDPE polymer may comprise carbon-carbon double bonds (-C=C-). The "unsaturated" means herein that the polymer composition, preferably the polyolefin (a), contains carbon-carbon double bonds/1000 carbon atoms in a total amount of at least 0.4/1000 carbon atoms.

As well known, the unsaturation can be provided to the polymer composition i.a. by means of the polyolefin component(s), a low molecular weight (Mw) compound(s), such as crosslinking booster(s) or scorch retarder additive(s), or any combinations thereof. The total amount of double bonds means herein double bonds determined from the source(s) that are known and deliberately added to contribute to the unsaturation. If two or more above sources of double bonds are chosen to be used for providing the unsaturation, then the total amount of double bonds in the polymer composition means the sum of the double bonds present in the double-bond sources. It is evident that a characteristic model compound for calibration is used for each chosen source to enable the quantitative infrared (FTIR) determination.

Any double bond measurements are carried out prior to optional crosslinking.

The unsaturation in the polymer composition originates at least from an unsaturated polyolefin (a) component. The unsaturated polyolefin (a) is an unsaturated LDPE polymer, preferably an unsaturated LDPE homopolymer or an unsaturated LDPE copolymer. When polyunsaturated comonomer(s) are present in the LDPE polymer as said unsaturated polyolefin, then the LDPE polymer is an unsaturated LDPE copolymer.

In a preferred embodiment the term "total amount of carbon-carbon double bonds" is defined from the unsaturated polyolefin (a), and refers, if not otherwise specified, to the combined amount of double bonds which originate from vinyl groups, vinylidene groups and *trans*-vinylene groups, if present. Naturally the polyolefin (a) does not necessarily contain all the above three types of double bonds. However, any of the three types, when present, is calculated to the "total amount of carbon-carbon double bonds". The amount of each type of double bond is measured as indicated under "Determination methods".

If an LDPE homopolymer is unsaturated, then the unsaturation can be provided e.g. by a chain transfer agent (CTA), such as propylene, and/or by polymerization conditions. If an LDPE copolymer is unsaturated, then the unsaturation can be provided by one or more of the following means: by a chain transfer agent (CTA), by one or more polyunsaturated comonomer(s) or by polymerisation conditions. It is well known that selected polymerisation conditions such as peak temperatures and pressure, can have an influence on the unsaturation level. In case of an unsaturated LDPE copolymer, it is preferably an unsaturated LDPE copolymer of ethylene with at least one polyunsaturated comonomer, and optionally with other comonomer(s), such as polar comonomer(s) which is preferably selected from acrylate or acetate comonomer(s). More preferably an unsaturated LDPE copolymer is an unsaturated LDPE copolymer of ethylene with at least polyunsaturated comonomer(s).

The polyunsaturated comonomers suitable for the unsaturated polyolefin (a) preferably consist of a straight carbon chain with at least 8 carbon atoms and at least 4 carbons between the non-conjugated double bonds, of which at least one is terminal, more preferably, said polyunsaturated comonomer is a diene, preferably a diene which comprises at least eight carbon atoms, the first carbon-carbon double bond being terminal and the second carbon-carbon double bond being non-conjugated to the first one. Preferred dienes are selected from $C_8$ to $C_{14}$ non-conjugated dienes or mixtures thereof, more preferably selected from 1,7-octadiene, 1,9-decadiene, 1,11-dodecadiene, 1,13-tetradecadiene, 7-methyl-1,6-octadiene, 9-methyl-1,8-decadiene, or mixtures thereof. Even more preferably, the diene is selected from 1,7-octadiene, 1,9-decadiene, 1,11-dodecadiene, 1,13-tetradecadiene, or any mixture thereof, however, without limiting to above dienes.

It is well known that e.g. propylene can be used as a comonomer or as a chain transfer agent (CTA), or both, whereby it can contribute to the total amount of the carbon-carbon double bonds, preferably to the total amount of the vinyl groups. Herein, when a compound which can also act as comonomer, such as propylene, is used as CTA for providing double bonds, then said copolymerisable comonomer is not calculated to the comonomer content.

The unsaturated LDPE polymer preferably has a total amount of carbon-carbon double bonds, which originate from vinyl groups, vinylidene groups and *trans*-vinylene groups, if present, of more than 0.4/1000 carbon atoms, preferably of more than 0.5/1000 carbon atoms. The upper limit of the amount of carbon-carbon double bonds present in the polyolefin is not limited and may preferably be less than 5.0/1000 carbon atoms, preferably less than 3.0/1000 carbon atoms.

In some embodiments, e.g. wherein higher crosslinking level with the low peroxide content is desired, the total amount of carbon-carbon double bonds, which originate from vinyl groups, vinylidene groups and *trans*-vinylene groups, if present, in the unsaturated LDPE, is preferably higher than 0.40/1000 carbon atoms, preferably higher than 0.50/1000 carbon atoms, preferably higher than 0.60/1000 carbon atoms.

More preferably the polyolefin (a) is an unsaturated LDPE as defined above and contains at least vinyl groups and the total amount of vinyl groups is preferably higher than 0.05/1000 carbon atoms, still more preferably higher than 0.08/1000 carbon atoms, and most preferably of higher than 0.11/1000 carbon atoms. Preferably, the total amount of vinyl groups is of lower than 4.0/1000 carbon atoms. More preferably, the polyolefin (a), prior to crosslinking, contains vinyl groups in total amount of more than 0.20/1000 carbon atoms, still more preferably of more than 0.30/1000 carbon atoms.

In a very preferable embodiment the polyolefin (a) is an unsaturated LDPE polymer as defined above and the polymer composition contains the preferable "low" peroxide content of the invention as defined above or in claims. Higher double bond content combined with the preferable "low" peroxide content further contributes to the low electrical conductivity. The embodiment is also preferable e.g. if high cable production speed or longer extrusion time, or both, is desired. The embodiment also contributes to the desirable mechanical and/or heat resistance properties are needed for the layer, preferably insulation layer, material.

The preferred polyolefin (a) for use in the polymer composition is an unsaturated LDPE copolymer of ethylene with at least one polyunsaturated comonomer, preferably a diene as defined above, and optionally with other comonomer(s), and has the total amount of carbon-carbon double bonds, which originate from vinyl groups, vinylidene groups and *trans*-vinylene groups, if present, as defined above, preferably has the total amount of vinyl groups as defined above. Said unsaturated LDPE copolymer is highly usable for the invention for use as the polyolefin (a) of a polymer composition, preferable in an insulation layer of a power cable, preferably of a DC power cable.

Typically, and preferably in wire and cable (W&C) applications, the density of the LDPE polymer, is higher than 860 kg/m$^3$. Preferably the density of the LDPE homopolymer or copolymer, is not higher than 960 kg/m$^3$, and preferably is from 900 to 945 kg/m$^3$. The MFR$_2$ (2.16 kg, 190 °C) of the LDPE polymer is preferably from 0.01 to 50 g/10min, more preferably from 0.01 to 40.0 g/10, more preferably is from 0.1 to 20 g/10min, and most preferably is from 0.2 to 10 g/10min.

Accordingly, the polyolefin (a) of the invention is a LDPE polymer, which is preferably produced at high pressure process by free radical initiated polymerisation (referred to as high pressure (HP) radical polymerization). The HP reactor can be e.g. a well known tubular or autoclave reactor or a mixture thereof, preferably a tubular reactor. The high pressure (HP) polymerisation and the adjustment of process conditions for further tailoring the other properties of the polyolefin depending on the desired end application are well known and described in the literature, and can readily be used by a skilled person. Suitable polymerisation temperatures range up to 400 °C, preferably from 80 to 350°C and pressure from 70 MPa, preferably 100 to 400 MPa, more preferably from 100 to 350 MPa. Pressure can be measured at least after compression stage and/or after the tubular reactor. Temperature can be measured at several points during all steps.

After the separation the obtained LDPE is typically in a form of a polymer melt which is normally mixed and pelletized in a pelletising section, such as pelletising extruder, arranged in connection to the HP reactor system. Optionally, additive(s), such as antioxidant(s), can be added in this mixer in a known manner.

Further details of the production of ethylene (co)polymers by high pressure radical polymerization can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O. Mähling pp. 7181-7184.

When an unsaturated LDPE copolymer of ethylene is prepared, then, as well known, the carbon-carbon double bond content can be adjusted by polymerising the ethylene e.g. in the presence of one or more polyunsaturated comonomer(s), chain transfer agent(s), or both, using the desired feed ratio between monomer, preferably ethylene, and polyunsaturated comonomer and/or chain transfer agent, depending on the nature and amount of C-C double bonds desired for the unsaturated LDPE copolymer. I.a. WO 9308222 describes a high pressure radical polymerisation of ethylene with polyunsaturated monomers. As a result the unsaturation can be uniformly distributed along the polymer chain in random copolymerisation manner. Also e.g. WO 9635732 describes high pressure radical polymerisation of ethylene and a certain type of polyunsaturated $\alpha,\omega$-divinylsiloxanes.

**Inorganic filler (b)**

The inorganic filler (b) can be any inorganic filler, preferably any conventional, such as a commercially available inorganic filler, suitable for an insulation layer.

Preferably the inorganic filler (b) is selected from inorganic oxides, hydroxides, carbonates, nitrides, carbides, kaolin clay, talc, borates, alumina, titania or titanates, silica, silicates, zirconia, glass fibers, glass particles, or any mixtures thereof.

Preferable compounds of oxides, hydroxides, carbonates, nitrides, carbides, borates, titanates, silicates and silica as the inorganic filler (b): Non-limiting examples of oxides are $SiO_2$, MgO, $TiO_2$, ZnO, barium oxide, calcium oxide, strontium or oxide, or any mixtures thereof, preferably from $SiO_2$, MgO, $TiO_2$, ZnO, or any mixtures thereof. Non-limiting examples of hydroxides are magnesium hydroxide or calcium hydroxide, or mixtures thereof, preferably magnesium hydroxide, or any mixtures thereof. Non-limiting examples of carbonates are calcium carbonate or magnesium calcium carbonate, or any mixtures thereof. Non-limiting examples of nitrides is aluminium nitride. Non-limiting examples of carbides is silicon carbide. Non-limiting examples of borates are sodium borate or calcium borate, or any mixtures thereof. Non-limiting examples of titanates are barium strontium titanate, barium titanate or strontium titanate, or any mixtures thereof. Non-limiting examples of silicates are magnesium aluminium silicate, magnesium calcium silicate or zirconium silicate, or any mixtures thereof. Non-limiting examples of silica are quartz or amorphous silica, such as fumed silica or precipitated silica, or any mixtures thereof.

More preferably the inorganic filler (b) is selected from inorganic oxides, nitrides, carbides, kaolin clay, talc, borates, alumina, titania or titanates, silica, silicates, zirconia, glass fibers, glass particles, or any mixtures thereof. Most preferable inorganic filler (b) is an inorganic oxide, preferably an inorganic oxide selected from $SiO_2$, MgO, $TiO_2$ or ZnO, or any mixtures thereof, more preferably from $SiO_2$, $TiO_2$ or MgO, or any mixtures thereof.

The inorganic filler (b) can be modified, e.g. functionalised by incorporating a functional moiety e.g. for modifying the surface properties of the filler, such as for modifying electrical properties or improving dispersion properties of the filler. Such modifications are well known to a skilled person and discussed e.g. in WO2006081400 referred above under background art.

Moreover, the inorganic filler (b) suitable for the present invention can be in the form of the inorganic filler (b) as such or in a form of a mixture comprising the inorganic filler (b) and a carrier medium, as well known in the art. The inorganic filler (b) as such is typically in a solid powder form.

According to one embodiment the polymer composition of the invention comprises (a) a polyolefin and a master batch (MB) which comprises an inorganic filler (b) and a carrier medium.

It is to be understood, that in case of a master batch (MB) embodiment, the amount of the inorganic filler (b) as defined above, below or in claims, does not mean the amount of MB, but the amount of inorganic filler (b) as such, present in the polymer composition, i.e. based on the combined amount of the pure inorganic filler (b) as such and the polyolefin (a).

If the inorganic filler (b) is incorporated into a carrier medium, then the carrier medium can be e.g. a liquid or solid powder product, preferably solid product. In case of a liquid carrier, the filler is typically suspended to a liquid. In case of a solid carrier, the mixture is a solid product, which can comprise solid inorganic filler (b) particles and solid carrier particles. Alternatively, the filler can be mixed with a carrier polymer and the obtained mixture is pelletised to MB pellets. The MB's are well known in the field of inorganic fillers.

**End uses and end applications of the polymer composition of invention**

The polymer composition of the invention is used for producing a layer of a direct current (DC) power cable, as defined above, below or in claims.

The invention provides a direct current (DC) power cable comprising a conductor which is surrounded at least by an inner semiconductive layer, an insulation layer and an outer semiconductive layer, in that order, wherein at least the insulation layer comprises, preferably consists of, a polymer composition as defined above, below or in claims comprising

(a) a polyolefin;
(b) an inorganic filler' and
(c) a crosslinking agent,

wherein said polyolefin (a) is an unsaturated LDPE.

Accordingly, the inner semiconductive layer of the power cable comprises, preferably consists of, a first semiconductive composition, the insulation layer comprises, preferably consists of, an insulation composition, and the outer semiconductive layer comprises, preferably consists of, a second semiconductive composition. Thus at least the insulation composition comprises, more preferably, consists of the polymer composition of the invention as defined above or in claims including the preferred subgroups thereof.

The term "conductor" means herein above and below that the conductor comprises one or more wires. Moreover, the cable may comprise one or more such conductors. Preferably the conductor is an electrical conductor and comprises one or more metal wires.

The first and the second semiconductive compositions can be different or identical and comprise a polymer(s) which is preferably a polyolefin or a mixture of polyolefins and a conductive filler, preferably carbon black. Suitable polyolefin(s) are e.g. polyethylene produced in a low pressure process or a polyethylene produced in a HP process (LDPE). The general polymer description as given above in relation to the polyolefin (a) applies also for the suitable polymers for semiconductive layers. The carbon black can be any conventional carbon black used in the semiconductive layers of a power cable, preferably in the semiconductive layer of a DC power cable. Preferably the carbon black has one or more, preferably all, of the following properties: a) a primary particle size of at least 5 nm which is defined as the number average particle diameter according ASTM D3849-95a, dispersion procedure D, b) iodine number of at least 30 mg/g according to ASTM D1510, and/or c) oil absorption number of at least 30 ml/100g which is measured according to ASTM D2414. Non-limiting examples of carbon blacks are e.g. acetylene carbon black, furnace carbon black and Ketjen carbon black, preferably furnace carbon black and acetylene carbon black. Preferably, the polymer composition comprises 10 to 50 wt% carbon black, based on the weight of the Semiconductive composition.

The DC power cable of the invention is preferably crosslinkable, wherein at least the insulation layer comprises, preferably consists of, the polymer composition as defined above, below or in claims comprising

(a) a polyolefin and
(b) an inorganic filler, as defined above or in claims, and

a crosslinking agent, preferably a peroxide in an amount of up to 110 mmol -O-O-/kg polymer composition, preferably of up to 90 mmol -O-O-/kg polymer composition, more preferably of 1.0 to 75 mmol -O-O-/kg polymer composition, preferably of less than 50 mmol -O-O-/kg polymer composition, preferably of less than 40 mmol -O-O-/kg polymer composition, preferably of less than 37 mmol -O-O-/kg polymer composition, preferably of less than 35 mmol -O-O-/kg polymer composition, preferably of 0.1 to 34 mmol -O-O-/kg polymer composition, preferably of 0.5 to 33 mmol -O-O-/kg polymer composition, more preferably from 5.0 to 30 mmol -O-O-/kg polymer composition, more preferably from 7.0 to 30 mmol -O-O-/kg polymer composition, more preferably from 10.0 to 30 mmol -O-O-/kg polymer composition; wherein said polyolefin (a) is an unsaturated LDPE.

Naturally, the further preferable subgroups of the above properties, further properties, variants and embodiments as defined above or below for the polymer composition or for the polyolefin (a) and the inorganic filler (b) components thereof apply similarly to the DC power cable of the invention.

As well known the cable can optionally comprise further layers, e.g. layers surrounding the insulation layer or, if present, the outer semiconductive layers, such as screen(s), a jacketing layer(s), other protective layer(s) or any combinations thereof.

The invention also provides a process for producing a DC power cable, as defined above or in claims, which is preferably crosslinkable, whereby the process comprises the steps of

- applying on a conductor, preferably by (co)extrusion, an inner semiconductive layer comprising a first semiconductive composition, an insulation layer comprising an insulation composition and an outer semiconductive layer comprising a second semiconductive composition, in that order, wherein at least the insulation composition of the insulation layer comprises, preferably consists of, the polymer composition comprising

  (a) a polyolefin and
  (b) an inorganic filler, as defined above or in claims, and
  (c) a crosslinking agent, which is preferably a peroxide in an amount of up to 110 mmol - O-O-/kg polymer composition, preferably of up to 90 mmol -O-O-/kg polymer composition, more preferably of 0 to 75 mmol -O-O-/kg polymer composition, preferably of less than 50 mmol -O-O-/kg polymer composition, preferably of less than 40 mmol -O-O-/kg polymer composition, preferably of less than 37 mmol -O-O-/kg polymer composition, preferably of less than 35 mmol -O-O-/kg polymer composition, preferably of 0.1 to 34 mmol -O-O-/kg polymer composition, preferably of 0.5 to 33 mmol -O-O-/kg polymer composition, more preferably from 5.0 to 30 mmol -O-O-/kg polymer composition, more preferably from 7.0 to 30 mmol -O-O-/kg polymer composition, more preferably from 10.0 to 30 mmol -O-O-/kg polymer composition; wherein said polyolefin (a) is an unsaturated LDPE.

Preferably, the polymer composition comprises the crosslinking agent and the process comprises a further step of crosslinking at least the polymer composition of said insulation layer, in the presence of the crosslinking agent, preferably in an amount as defined above, at crosslinking conditions, and optionally, and preferably, crosslinking at least one, preferably both, of the first semiconductive composition of the inner semiconductive layer and the second semiconductive composition of the outer semiconductive layer, in the presence of a crosslinking agent at crosslinking conditions.

More preferably, a crosslinkable DC power cable, preferably a crosslinkable HV DC power cable, is produced, wherein the process comprises the steps of

  (a)

- providing and mixing, preferably meltmixing in an extruder, an optionally, and preferably, crosslinkable first semiconductive composition comprising a polymer, a carbon black and optionally further component(s) for the inner semiconductive layer,
- providing and mixing, preferably meltmixing in an extruder, a crosslinkable polymer composition of the invention for the insulation layer,
- providing and mixing, preferably meltmixing in an extruder, an optionally, and preferably, crosslinkable second semiconductive composition comprising a polymer, a carbon black and optionally further component(s) for the outer semiconductive layer,

  (b) applying on a conductor, preferably by coextrusion,

- a meltmix of the first semiconductive composition obtained from step (a) to form the inner semiconductive layer,
- a meltmix of polymer composition of the invention obtained from step (a) to form the insulation layer, and

- a meltmix of the second semiconductive composition obtained from step (a) to form the outer semiconductive layer, and

(c) optionally crosslinking in the presence of a crosslinking agent and at crosslinking conditions one or more of the polymer composition of the insulation layer, the first semiconductive composition of the inner semiconductive layer and the second semiconductive composition of the outer semiconductive layer, of the obtained cable, preferably at least the polymer composition of the insulation layer, more preferably the polymer composition of the insulation layer, the first semiconductive composition of the inner semiconductive layer and optionally, and preferably, the second semiconductive composition of the outer semiconductive layer.

Melt mixing means mixing above the melting point of at least the major polymer component(s) of the obtained mixture and is carried out for example, without limiting to, in a temperature of at least 15°C above the melting or softening point of polymer component(s).

The term "(co)extrusion" means herein that in case of two or more layers, said layers can be extruded in separate steps, or at least two or all of said layers can be coextruded in a same extrusion step, as well known in the art. The term "(co)extrusion" means herein also that all or part of the layer(s) are formed simultaneously using one or more extrusion heads. For instance a triple extrusion can be used for forming three layers. In case a layer is formed using more than one extrusion heads, then for instance, the layers can be extruded using two extrusion heads, the first one for forming the inner semiconductive layer and the inner part of the insulation layer, and the second head for forming the outer insulation layer and the outer semiconductive layer.

As well known, the polymer composition of the invention and the optional and preferred first and second semiconductive compositions can be produced before or during the cable production process. Moreover the polymer composition of the invention and the optional and preferred first and second semiconductive composition can each independently comprise part or all of the component(s) of the final composition, before introducing to the (melt)mixing step a) of the cable production process.

The (melt)mixing step (a) of the provided polymer composition of the invention and of the preferable first and second semiconductive compositions is preferably carried out in a cable extruder. The step a) of the cable production process may optionally comprise a separate mixing step, e.g. in a mixer arranged in connection and preceding the cable extruder of the cable production line. Mixing in the preceding separate mixer can be carried out by mixing with or without external heating (heating with an external source) of the component(s). In case one of the polyolefin (a) or the inorganic filler (b), or the optional and preferable peroxide(s) and part or all of the optional further component(s), such as further additive(s), of the polymer composition of the invention and, respectively, part or all of the component(s) of the first or second semiconductive compositions, are added to the polyolefin during the cable production process, then the addition(s) can take place at any stage during the mixing step (a), e.g at the optional separate mixer preceding the cable extruder or at any point(s) of the cable extruder.

If the inorganic filler (b) is added during the (melt)mixing step (a), then it can added to the polyolefin (a) as such or in form of a master batch (MB) as defined above, as well known in the art.

The dispersion of the inorganic filler (b) to the other components, such as the polyolefin (a), of the polymer composition can be adjusted as desired e.g. by modifying the surface properties of the inorganic filler, by using a MB of the inorganic filler (b) or by optimising the shear rate during the mixing step of the polymer composition. The conditions of the mixing step (a) can be adapted by a skilled person depending on the used inorganic filler (b), which are typically commercial products, to achieve a homogeneous dispersion of the components.

Accordingly, preferably, at least the polymer component(s) of the polymer composition of the invention and, optionally, the optional first and second semiconductive composition are provided to the cable production process in form of powder, grain or pellets. Pellets mean herein generally any polymer product which is formed from reactor-made polymer (obtained directly from the reactor) by post-reactor modification to a solid particulate polymer product. A well-known post-reactor modification is pelletising a meltmix of a polymer product and optional additive(s) in a pelletising equipment to solid pellets. Pellets can be of any size and shape.

Moreover, the polyolefin (a) and the inorganic filler (b) may be mixed together before introducing to the cable production process. Thus the polymer composition may be a premade mixture in a form of a solid powder, grain or pellet product, preferably a pellet product. This premade mixture, preferably the pellets where each pellet comprises both the polyolefin (a) and the inorganic filler (b) is then provided to the (melt)mixing step (a) of cable production process. Alternatively, each of the polyolefin (a) and the inorganic filler (b) can be provided separately to the (melt)mixing step (a) of the cable production process, where the components are blended together during the step (a).

It is preferred that the polyolefin (a) and the inorganic filler (b) are both in a same powder, grain or pellet product, preferably in a pellet product as described above, which premade mixture is used in the cable production process.

All or part of the optional additives can be present in any such powder, grain or pellets or added separately.

As mentioned above, the polymer composition comprises a crosslinking agent, which is preferably peroxide.

The crosslinking agent can be added before the cable production process or during the (melt)mixing step (a). For instance, and preferably, the crosslinking agent and also the optional further component(s), such as additive(s), can already be present in the polyolefin (a) or the inorganic filler (b), or if a master batch of the inorganic filler (b) is used, in said MB, before the use in the production line of the cable production process. The crosslinking agent can be e.g. meltmixed together with the polyolefin (a) or the inorganic filler (b), or both, or a mixture thereof, and optional further component(s), and then the meltmix is pelletised. Alternatively and preferably, the crosslinking agent is added, preferably impregnated, to solid polymer particles, preferably to pellets of the polyolefin (a) component, more preferably to pellets of the polymer composition. If crosslinking agent is used to crosslink the polymer composition, then it is most preferably added to the pellets of the polymer composition comprising the polyolefin (a) and the inorganic filler (b) prior to introduction to the (melt)mixing step (a) of the cable production process. Then the premade pellets can later be used for cable production.

It is preferred that the meltmix of the polymer composition obtained from meltmixing step (a) consists of the polyolefin (a) of the invention as the sole polymer component. However it is to be understood that the inorganic filler (b) and/or the optional, and preferable, additive(s) can be added to polymer composition as such or as a mixture with a carrier polymer, i.e. in a form of so-called master batch.

In a preferred embodiment of the cable production process, a crosslinkable DC power cable, more preferably a crosslinkable HV DC power cable, is produced, wherein the insulation layer comprises, preferably consists of, a crosslinkable polymer composition of the invention which further comprises a peroxide in an amount as given above or below, and wherein at least the crosslinkable insulation layer of the obtained cable is crosslinked in step c) at crosslinking conditions.

More preferably in this crosslinkable embodiment, a crosslinked DC power cable, more preferably a crosslinked HV DC power cable, is provided.

Crosslinking of the polymer composition of the insulation layer is preferably carried out in the presence of a peroxide in an amount as defined above or in below claims, and the optional and preferable crosslinking of the first semiconductive composition of the inner semiconductive, is carried out in the presence of crosslinking agent(s), preferably in the presence of free radical generating agent(s), which is preferably a peroxide(s).

The crosslinking agent(s) can already be present in the optional first and second semiconductive composition before introducing to the crosslinking step c) or introduced during the crosslinking step. Peroxide is the preferred crosslinking agent for said optional first and second semiconductive compositions and is preferably included to the pellets of semiconductive composition before the composition is used in the cable production process as described above.

Crosslinking can be carried out at increased temperature which is chosen, as well known, depending on the type of crosslinking agent. For instance temperatures above 150°C, such as from 160 to 350°C, are typical, however without limiting thereto.

The processing temperatures and devices are well known in the art, e.g. conventional mixers and extruders, such as single or twin screw extruders, are suitable for the process of the invention.

The invention further provides a crosslinked direct current (DC) power cable, preferably a crosslinked HV DC power cable, where the inner semiconductive layer comprises, preferably consists of, an optionally crosslinked first semiconductive composition, the polymer composition of the insulation layer comprises, preferably consists of, a crosslinked polymer composition of the invention as defined above or in claims, and the outer semicoductive layer comprises, preferably consists of, an optionally crosslinked second semiconductive composition, more preferably where the inner semiconductive layer comprises, preferably consists of, a crosslinked first semiconductive composition, the polymer composition of the insulation layer comprises, preferably consists of, a crosslinked polymer composition of the invention as defined above or in claims crosslinked, and the outer semicoductive layer comprises, preferably consists of, a crosslinked second semiconductive composition.

The non-crosslinked, or, and preferably, crosslinked power cable comprising the non-crosslinked, or preferably crosslinked, polymer composition of the invention in an insulation layer, has, i.a.

- The advantageous electrical properties, which, if the polymer composition of the invention is crosslinked , are very advantageous after the degassing step,
- If the polymer composition of the invention is crosslinked, then the preferred low peroxide content prior crosslinking enables robust high speed extrusion possible leading to longer stable production periods at higher extrusion speed and quality due to lowered (or no) risk to scorching (undesired premature crosslinking) of the polymer composition in the extruder and/or in the layer(s),
- If the polymer composition of the invention is crosslinked, then the preferable low peroxide content results in lesser amounts of any undesired by-products, i.e. decomposition products, formed from the crosslinking agent. Thus degassing step can be reduced, which accelerates the overall cable production process,
- Unexpectedly, the power cable, when non-crosslinked or crosslinked with the preferred lower peroxide content is mechanically sufficient.

The preferred DC power cable of the invention is a HV DC power cable. Preferably the HV DC power cable operates at voltages as defined above for HV DC cable or extra HV DC cable, depending on the desired end cable application.

Moreover, the power cable, preferably the DC power cable, more preferably the HV DC power cable, of the invention is crosslinked as described above.

The thickness of the insulation layer of the DC power cable, more preferably of the HV DC power cable, is typically 2 mm or more, preferably at least 3 mm, preferably of at least 5 to 100 mm, more preferably from 5 to 50 mm, and conventionally 5 to 40 mm, e.g. 5 to 35 mm, when measured from a cross section of the insulation layer of the cable. The thickness of the inner and outer semiconductive layers is typically less than that of the insulation layer, and in HV DC power cables can be e.g. more than 0.1 mm, such as from 0.3 up to 20 mm, preferably from 0.3 to 10 mm. The thickness of the inner semiconductive layer is preferably 0.3 - 5.0 mm, preferably 0.5 - 3.0 mm, preferably 0.8 - 2.0 mm. The thickness of the outer semiconductive layer is preferably from 0.3 to 10 mm, such as 0.3 to 5 mm, preferably 0.5 to 3.0 mm, preferably 0.8 - 3.0 mm. It is evident for and within the skills of a skilled person that the thickness of the layers of the DC cable depends on the intended voltage level of the end application cable and can be chosen accordingly.

## Determination methods

Unless otherwise stated in the description or experimental part the following methods were used for the property determinations.

**Wt%:** % by weight

## Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene and at 230 °C for polypropylene. MFR may be determined at different loadings such as 2.16 kg ($MFR_2$) or 21.6 kg ($MFR_{21}$).

## Comonomer contents

a) Comonomer content in random copolymer of polypropylene:

Quantitative Fourier transform infrared (FTIR) spectroscopy was used to quantify the amount of comonomer. Calibration was achieved by correlation to comonomer contents determined by quantitative nuclear magnetic resonance (NMR) spectroscopy.

The calibration procedure based on results obtained from quantitative $^{13}$C-NMR spectroscopy was undertaken in the conventional manner well documented in the literature. The amount of comonomer (N) was determined as weight percent (wt%) via:

$$N = k1 \, (A / R) + k2$$

wherein A is the maximum absorbance defined of the comonomer band, R the maximum absorbance defined as peak height of the reference peak and with k1 and k2 the linear constants obtained by calibration. The band used for ethylene content quantification is selected depending if the ethylene content is random (730 cm$^{-1}$) or block-like (as in heterophasic PP copolymer) (720 cm$^{-1}$). The absorbance at 4324 cm$^{-1}$ was used as a reference band.

b) Quantification of alpha-olefin content in linear low density polyethylenes and low density polyethylenes by NMR spectroscopy:

The comonomer content was determined by quantitative 13C nuclear magnetic resonance (NMR) spectroscopy after basic assignment (J. Randall JMS - Rev. Macromol. Chem. Phys., C29(2&3), 201-317 (1989). Experimental parameters were adjusted to ensure measurement of quantitative spectra for this specific task.

Specifically solution-state NMR spectroscopy was employed using a Bruker AvanceIII 400 spectrometer. Homogeneous samples were prepared by dissolving approximately 0.200 g of polymer in 2.5 ml of deuterated-tetrachloroethene in 10 mm sample tubes utilising a heat block and rotating tube oven at 140 C. Proton decoupled 13C single pulse NMR spectra with NOE (powergated) were recorded using the following acquisition parameters: a flip-angle of 90 degrees, 4 dummy scans, 4096 transients an acquisition time of 1.6s, a spectral width of 20kHz, a temperature of 125 C, a bilevel WALTZ proton decoupling scheme and a relaxation delay of 3.0 s. The resulting FID was processed using the following processing parameters: zero-filling to 32k data points and apodisation using a gaussian window function; automatic zeroth and first order phase correction and automatic baseline correction using a fifth order polynomial restricted to the region of interest.

Quantities were calculated using simple corrected ratios of the signal integrals of representative sites based upon methods well known in the art.

c) Comonomer content of polar comonomers in a low density polyethylene (LDPE)

(1) Polymers containing > 6 wt.% polar comonomer units

Comonomer content (wt%) was determined in a known manner based on Fourier transform infrared spectroscopy (FTIR) determination calibrated with quantitative nuclear magnetic resonance (NMR) spectroscopy. Below is exemplified the determination of the polar comonomer content of ethylene ethyl acrylate, ethylene butyl acrylate and ethylene methyl acrylate. Film samples of the polymers were prepared for the FTIR measurement: 0.5-0.7 mm thickness was used for ethylene butyl acrylate and ethylene ethyl acrylate and 0.10 mm film thickness for ethylene methyl acrylate in amount of >6wt%. Films were pressed using a Specac film press at 150°C, approximately at 5 tons, 1-2 minutes, and then cooled with cold water in a not controlled manner. The accurate thickness of the obtained film samples was measured.

After the analysis with FTIR, base lines in absorbance mode were drawn for the peaks to be analysed. The absorbance peak for the comonomer was normalised with the absorbance peak of polyethylene (e.g. the peak height for butyl acrylate or ethyl acrylate at 3450 cm$^{-1}$ was divided with the peak height of polyethylene at 2020 cm$^{-1}$). The NMR spectroscopy calibration procedure was undertaken in the conventional manner which is well documented in the literature, explained below.

For the determination of the content of methyl acrylate a 0.10 mm thick film sample was prepared. After the analysis the maximum absorbance for the peak for the methylacrylate at 3455 cm$^{-1}$ was subtracted with the absorbance value for the base line at 2475 cm$^{-1}$ ($A_{methylacrylate} - A_{2475}$). Then the maximum absorbance peak for the polyethylene peak at 2660 cm$^{-1}$ was subtracted with the absorbance value for the base line at 2475 cm$^{-1}$ ($A_{2660} - A_{2475}$). The ratio between ($A_{methylacrylate}-A_{2475}$) and ($A_{2660}-A_{2475}$) was then calculated in the conventional manner which is well documented in the literature.

The weight-% can be converted to mol-% by calculation. It is well documented in the literature.

Quantification of copolymer content in polymers by NMR spectroscopy

The comonomer content was determined by quantitative nuclear magnetic resonance (NMR) spectroscopy after basic assignment (e.g. "NMR Spectra of Polymers and Polymer Additives", A. J. Brandolini and D. D. Hills, 2000, Marcel Dekker, Inc. New York). Experimental parameters were adjusted to ensure measurement of quantitative spectra for this specific task (e.g "200 and More NMR Experiments: A Practical Course", S. Berger and S. Braun, 2004, Wiley-VCH, Weinheim). Quantities were calculated using simple corrected ratios of the signal integrals of representative sites in a manner known in the art.

(2) Polymers containing 6 wt.% or less polar comonomer units

Comonomer content (wt.%) was determined in a known manner based on Fourier transform infrared spectroscopy (FTIR) determination calibrated with quantitative nuclear magnetic resonance (NMR) spectroscopy. Below is exemplified the determination of the polar comonomer content of ethylene butyl acrylate and ethylene methyl acrylate. For the FT-IR measurement a film samples of 0.05 to 0.12 mm thickness were prepared as described above under method 1). The accurate thickness of the obtained film samples was measured.

After the analysis with FT-IR base lines in absorbance mode were drawn for the peaks to be analysed. The maximum absorbance for the peak for the comonomer (e.g. for methylacrylate at 1164 cm$^{-1}$ and butylacrylate at 1165 cm$^{-1}$) was subtracted with the absorbance value for the base line at 1850 cm$^{-1}$ ($A_{polar\ comonomer} - A_{1850}$). Then the maximum absorbance peak for polyethylene peak at 2660 cm$^{-1}$ was subtracted with the absorbance value for the base line at 1850 cm$^{-1}$ ($A_{2660} - A_{1850}$). The ratio between ($A_{comonomer}-A_{1850}$) and ($A_{2660}-A_{1850}$) was then calculated. The NMR spectroscopy calibration procedure was undertaken in the conventional manner which is well documented in the literature, as described above under method 1).

The weight-% can be converted to mol-% by calculation. It is well documented in the literature.

Below is exemplified how polar comonomer content obtained from the above method (1) or (2), depending on the amount thereof, can be converted to micromol or mmol per g polar comonomer:

The millimoles (mmol) and the micro mole calculations have been done as described below.

For example, if 1 g of the poly(ethylene-co-butylacrylate) polymer, which contains 20 wt% butylacrylate, then this material contains $0.20/M_{butylacrylate}$ (128 g/mol) = 1.56 x $10^{-3}$ mol. (=1563 micromoles).

The content of polar comonomer units in the polar copolymer $C_{polar}$ comonomer is expressed in mmol/g (copolymer). For example, a polar poly(ethylene-co-butylacrylate) polymer which contains 20 wt.% butyl acrylate comonomer units has a $C_{polar}$ comonomer of 1.56 mmol/g. The used molecular weights are: $M_{butylacrylate}$ = 128 g/mole, $M_{ethylacrylate}$ = 100 g/mole, $M_{methylacrylate}$ = 86 g/mole).

**Density**

Low density polyethylene (LDPE): The density was measured according to ISO 1183-2. The sample preparation was executed according to ISO 1872-2 Table 3 Q (compression moulding).

Low polymerisation process polyethylene: Density of the polymer was measured according to ISO 1183 / 1872-2B.

**Method for determination of the amount of double bonds in the Polymer Composition or in the polymer**

**A) Quantification of the amount of carbon-carbon double bonds by IR spectroscopy**

Quantitative infrared (IR) spectroscopy was used to quantify the amount of carbon-carbon doubles (C=C). Calibration was achieved by prior determination of the molar extinction coefficient of the C=C functional groups in representative low molecular weight model compounds of known structure.

The amount of each of these groups (N) was determined as number of carbon-carbon double bonds per thousand total carbon atoms (C=C/1000C) via:

$$N = (A \times 14) / (E \times L \times D)$$

were A is the maximum absorbance defined as peak height, E the molar extinction coefficient of the group in question ($1 \cdot mol^{-1} \cdot mm^{-1}$), L the film thickness (mm) and D the density of the material ($g \cdot cm^{-1}$).

The total amount of C=C bonds per thousand total carbon atoms can be calculated through summation of N for the individual C=C containing components.

For polyethylene samples solid-state infrared spectra were recorded using a FTIR spectrometer (Perkin Elmer 2000) on compression moulded thin (0.5-1.0 mm) films at a resolution of 4 cm$^{-1}$ and analysed in absorption mode.

1) Polymer compositions comprising polyethylene homopolymers and copolymers, except polyethylene copolymers with ≥ 0.4 wt% polar comonomer

For polyethylenes three types of C=C containing functional groups were quantified, each with a characteristic absorption and each calibrated to a different model compound resulting in individual extinction coefficients:

- vinyl (R-CH=CH2) via 910 cm$^{-1}$ based on 1-decene [dec-1-ene] giving E = 13.13 l·mol$^{-1}$·mm$^{-1}$
- vinylidene (RR'C=CH2) via 888 cm$^{-1}$ based on 2-methyl-1-heptene [2-methyhept-1-ene] giving E = 18.24 l·mol$^{-1}$·mm$^{-1}$
- trans-vinylene (R-CH=CH-R') via 965 cm$^{-1}$ based on trans-4-decene [(E)-dec-4-ene] giving E = 15.14 l·mol$^{-1}$·mm$^{-1}$

For polyethylene homopolymers or copolymers with < 0.4 wt% of polar comonomer linear baseline correction was applied between approximately 980 and 840 cm$^{-1}$.

2) Polymer compositions comprising polyethylene copolymers with ≥ 0.4 wt% polar comonomer

For polyethylene copolymers with > 0.4 wt% of polar comonomer two types of C=C containing functional groups were quantified, each with a characteristic absorption and each calibrated to a different model compound resulting in individual extinction coefficients:

- vinyl (R-CH=CH2) via 910 cm$^{-1}$ based on 1-decene [dec-1-ene] giving E = 13.13 1-mol$^{-1}$·mm$^{-1}$
- vinylidene (RR'C=CH2) via 888 cm$^{-1}$ based on 2-methyl-1-heptene [2-methyl-hept-1-ene] giving E = 18.24 l·mol$^{-1}$·mm$^{-1}$

EBA:

For poly(ethylene-co-butylacrylate) (EBA) systems linear baseline correction was applied between approximately 920 and 870 $cm^{-1}$.

EMA:

For poly(ethylene-co-methylacrylate) (EMA) systems linear baseline correction was applied between approximately 930 and 870 $cm^{-1}$.

3) Polymer compositions comprising unsaturated low molecular weight molecules

For systems containing low molecular weight C=C containing species direct calibration using the molar extinction coefficient of the C=C absorption in the low molecular weight species itself was undertaken.

**B) Quantification of molar extinction coefficients by IR spectroscopy**

The molar extinction coefficients were determined according to the procedure given in ASTM D3124-98 and ASTM D6248-98. Solution-state infrared spectra were recorded using a FTIR spectrometer (Perkin Elmer 2000) equipped with a 0.1 mm path length liquid cell at a resolution of 4 $cm^{-1}$.

The molar extinction coefficient (E) was determined as $1 \cdot mol^{-1} \cdot mm^{-1}$ via:

$$E = A / (C \times L)$$

where A is the maximum absorbance defined as peak height, C the concentration ($mol \cdot l^{-1}$) and L the cell thickness (mm).

At least three 0.18 $mol \cdot l^{-1}$ solutions in carbondisulphide ($CS_2$) were used and the mean value of the molar extinction coefficient determined.

**DC Conductivity method**

Electrical conductivity measured at 70 °C and 30 kV/mm mean electric field from a 1 mm plaque sample consisting of the polymer composition which is a non-crosslinked sample (method 1), a crosslinked and non-degassed sample (method 1) or a crosslinked and degassed sample (method 2).

The plaques are compression moulded from pellets of the test polymer composition. The final plaques consist of the test polymer composition and have a thickness of 1 mm and a diameter of 330 mm.

The conductivity measurement can be performed using a test polymer composition which does not comprise or comprises the optional crosslinking agent. In case of no crosslinking agent is used, then the sample is prepared according to method 1 as described below and the conductivity is measured from a non-crosslinked plaque sample using the below procedure. If the test polymer composition comprises the crosslinking agent, then the crosslinking occurs during the preparation of the plaque samples. In case of a crosslinked sample, the sample is prepared according to method 1 (non-degassed sample) or method 2 (degassed sample) as described below. The conductivity is measured according to the below procedure from the resulting crosslinked plaque sample. Crosslinking agent, if present in the polymer composition prior to crosslinking, is preferably a peroxide, as herein.

The plaques are press-moulded at 130°C for 12 min while the pressure is gradually increased from 2 to 20 MPa. Thereafter the temperature is increased and reaches 180°C after 5 min. The temperature is then kept constant at 180°C for 15 min during which the plaque becomes fully crosslinked by means of the peroxide, if present in the test polymer composition. Finally the temperature is decreased using the cooling rate 15 °C/min until room temperature is reached when the pressure is released.

Method 1: Preparation of a non-crosslinked sample or of a crosslinked sample which is not degassed (crosslinked non-degassed sample). The plaques are immediately after the pressure release wrapped in metallic foil in order to prevent loss of volatile substances. Method 2: Preparation of a crosslinked sample which is degassed (crosslinked degassed sample). The plaque obtained from method 1 is placed in a vacuum oven at pressure less than 10 Pa and degassed for 24 h at 70°C. Thereafter the plaque is again wrapped in metallic foil in order to prevent further exchange of volatile substances between the plaque and the surrounding.

A high voltage source is connected to the upper electrode, to apply voltage over the test sample. The resulting current through the sample is measured with an electrometer. The measurement cell is a three electrodes system with brass electrodes. The brass electrodes are equipped with heating pipes connected to a heating circulator, to facilitate measurements at elevated temperature and provide uniform temperature of the test sample. The diameter of the measurement electrode is 100 mm. Silicone rubber skirts are placed between the brass electrode edges and the test sample, to avoid flashovers from the round edges of the electrodes.

The applied voltage was 30 kV DC meaning a mean electric field of 30 kV/mm. The temperature was 70°C. The current through the plaque was logged throughout the whole experiments lasting for 24 hours. The current after 24 hours was used to calculate the conductivity of the insulation.

This method and a schematic picture of the measurement setup for the conductivity measurements has been thoroughly described in a publication presented at the Nordic Insulation Symposium 2009 (Nord-IS 09), Gothenburg, Sweden, June 15-17, 2009, page 55-58: Olsson et al, "Experimental determination of DC conductivity for XLPE insulation".

**Experimental part**

**Preparation of the components of the polymer compositions of the present invention and of the references**

The polyolefins were low density polyethylenes produced in a high pressure reactor. The production of inventive and reference polymers is described below. As to CTA feeds, e.g. the PA content can be given as liter/hour or kg/h and converted to either units using a density of PA of 0,807 kg/liter for the recalculation.

**LDPE1:** Ethylene with recycled CTA was compressed in a 5-stage precompressor and a 2-stage hyper compressor with intermediate cooling to reach initial reaction pressure of ca 2628 bar. The total compressor throughput was ca 30 tons/hour. In the compressor area approximately 4.9 litres/hour of propion aldehyde (PA, CAS number: 123-38-6) was added together with approximately 81 kg propylene/hour as chain transfer agents to maintain an MFR of 1.89 g/10 min. Here also 1,7-octadiene was added to the reactor in amount of 27 kg/h. The compressed mixture was heated to 157°C in a preheating section of a front feed two-zone tubular reactor. A mixture of commercially available peroxide radical initiators dissolved in isododecane was injected just after the preheater in an amount sufficient for the exothermal polymerisation reaction to reach peak temperatures of ca 275 °C after which it was cooled to approximately 200°C. The subsequent 2nd peak reaction temperatures was 264°C. The reaction mixture was depressurised by a kick valve, cooled and polymer was separated from unreacted gas.

**LDPE 2:** Purified ethylene was liquefied by compression and cooling to a pressure of 90 bars and a temperature of -30 °C and split up into to two equal streams of roughly 14 tons/hour each. The CTA (methyl ethyl ketone (MEK)), air and a commercial peroxide radical initiator dissolved in a solvent were added to the two liquid ethylene streams in individual amounts. Here also 1,7-octadiene was added to the reactor in amount of 40 kg/h. The two mixtures were separately pumped through an array of 4 intensifiers to reach pressures of 2200-2300 bars and exit temperatures of around 40 °C. These two streams were respectively fed to the front (zone 1) (50%) and side (zone 2) (50%) of a split-feed two-zone tubular reactor. MEK was added in amounts of 190 kg/h to the front stream to maintain a $MFR_2$ of around 2 g/10 min. The front feed stream was passed through a heating section to reach a temperature sufficient for the exothermal polymerization reaction to start. The reaction reached peak temperatures were 251 °C and 290 °C in the first and second zones, respectively. The side feed stream cooled the reaction to an initiation temperature of the second zone of 162 °C. Air and peroxide solution was added to the two streams in enough amounts to reach the target peak temperatures. The reaction mixture was depressurized by product valve, cooled and polymer was separated from unreacted gas.

Table 1: Polymer properties of LDPE1

| Base Resin Properties | LDPE1 | LDPE2 |
|---|---|---|
| MFR 2.16kg, at190°C [g/10min] | 1.89 | 1.90 |
| Density [kg/m$^3$] | 923 | 922 |
| Vinyl [C=C/1000C] | 0.54 | 0.33 |
| Vinylidene [C=C/1000C] | 0.16 | 0.27 |
| Trans-vinylene [C=C/1000C] | 0.06 | 0.07 |

**Inorganic fillers:**

**SiO$_2$:** Commercially available SiO$_2$, namely Aerosil® R7200 (supplier Evonik), which is a structure modified and with methacrylsilane aftertreated, fumed silica based on Aerosil® 200, CAS NR: 100 402-78-6.

Table 2.

| Properties | Unit | Typical Value |
|---|---|---|
| Specific surface area (BET) | m$^2$/g | 150 ± 25 |
| Carbon content | wt% | 4.5 - 6.5 |
| Tamped density*<br>acc. to DIN EN ISO 787/11, Aug. 1983 | g/l | approx. 230 |
| Moisture*<br>2 hours at 105 °C | wt% | ≤ 1.5 |
| Ignition loss<br>2 hours at 1000°C based on material dried for 2 hours at 105 °C | wt% | 6.0 - 11.0 |
| pH<br>in 4% Dispersion | | 4.0 - 6.0 |
| SiO$_2$ - content<br>based on ignited material | wt% | ≥ 99.8 |
| * ex plant | | |

The data represents typical values (no product specification).

Determination of the Specific Surface Area (DIN ISO 9277)
Determination of the Carbon Content (DIN ISO 3262-20 Paragraph 8)
Determination of the Ignition Loss (DIN 3262-20)
Determination of the Silicon Dioxide Content (DIN ISO 3262-20 Paragraph 6)
Determination of the Tapped Density (ISO ISO 787/11)

**MgO:** Commercially available MgO, article number 44733, supplier Alfa Aesar, was not surface treated, CAS nr: 1309-48-4.
100nm APS Powder, S.A. >7.3m$^2$/g (given by the supplier).

**Compounding of the polymer compositions:** The inorganic filler component of the inventive compositions was first dried over night at 100°C and then used for the compounding step. Each pellets of the polymer component of a test polymer composition together with additives, if not present in the pellets, other than the crosslinking agent, and the inorganic filler component, if present, were added as separately to a pilot scale extruder (Buss kneader PR46B-1 ID/HI) The obtained mixture was meltmixed in conventional conditions and extruded to pellets in a conventional manner using the settings disclosed. The crosslinking agent, herein peroxide, if present, was added to the pellets and the resulting pellets were used for the experimental part.

The amounts of polymer component(s), peroxide, additives (AO and SR) are given in table 3:

Buss kneader PR46B-1 ID/HI

| Set Values Temperature [°C] | | | | | | Mixer | | Extruder | |
|---|---|---|---|---|---|---|---|---|---|
| Mixer screw | Zon 1 | Zon 2 | Extr.* screw | Extr.* barrel | Heat Die | Speed [rpm] | Output [kg/h] | Speed [rpm] | Pressure [bar] |
| 60 | 195 | 180 | 160 | 170 | 170 | 214.0 | 10.00 | 15.2 | 12.0 |
| Extr.* = Extruder | | | | | | | | | |

Table 4: Polymer compositions of the inventions and reference compositions and the electrical conductivity results:

| Components | Inv. comp 1 | Inv. comp 2 | Inv. comp 3 | Inv. comp 4 | Inv. comp 5 | Ref 1 | Ref 2 |
|---|---|---|---|---|---|---|---|
| LDPE 1 [wt%*] | | | 98.5 | 99 | 99.5 | | 100 |
| LDPE2 [wt%*] | 98.5 | 98 | | | | 100 | |

(continued)

| Components | Inv. comp 1 | Inv. comp 2 | Inv. comp 3 | Inv. comp 4 | Inv. comp 5 | Ref 1 | Ref 2 |
|---|---|---|---|---|---|---|---|
| Inorganic filler, Aerosil R7200 [wt%*] | 1.5 | | 1.5 | 1 | 0.5 | | |
| Inorganic filler, MgO [wt%*] | | 2 | | | | | |
| Antioxidant (AO) [wt%**] | 0.08 | 0.08 | 0.08 | 0.08 | 0.08 | 0.08 | 0.08 |
| Scorch retarder (SR) [wt%**] | 0.35 | 0.35 | 0.05 | 0.05 | 0.05 | 0.35 | 0.05 |
| Crosslinking agent, mmol -O-O-/kg polymer composition [wt% **] | 50 (1.35) | 50 (1.35) | 28 (0.75) | 28 (0.75 | 28 (0.75) | 50 (1.35) | 28 (0.75) |
| **DC conductivity:** | | | | | | | |
| Method (1), non-degassed, 1 mm plaque (fS/m) | 72 | 78 | - | 19.2 | 22.3 | 122 | 26 |
| Method (2), degassed, 1 mm plaque (fS/m) | 3.0 | 1.0 | 3.3 | 3.6 | 2.6 | 50 | 21 |

Crosslinking agent: Dicumylperoxide (CAS no. 80-43-3)
AO: Antioxidant: 4,4'-thiobis (2-tertbutyl-5-methylphenol) (CAS no. 96-69-5)
SR: Scorch retardant: 2,4-Diphenyl-4-methyl-1-pentene (CAS 6362-80-7)
* The amounts of polymer component LDPE1 or LDPE2 and the inorganic filler in table 4 are based on the combined amount of the polymer component LDPE1 or LDPE2 and the inorganic filler. The amount 100 wt% of polymer component in table 4 means that the polymer is used alone without the inorganic filler.
** The amounts of peroxide (wt%), AO and SR are based on the final composition.

The table 4 shows that the DC conductivity of the non-degassed inventive compositions is advantageously low, see the comparison between Inventive composition 1 with peroxide content of 50 mmol -O-O-/kg polymer composition is clearly lower than that of the corresponding reference 1 with the same LDPE 2. Moreover, the DC conductivity of the degassed inventive compositions comprising the inorganic filler is even lower compared to the non-degassed DC conductivity values thereof. Furthermore, even the reduction of the amount of peroxide does not sacrifice the DC conductivity values of non-degassed and degassed inventive composition, see inventive composition 3. The test results show further that the polymer composition of the invention comprising the inorganic filler maintains the advantageously low DC conductivity, even if the peroxide content, inorganic filler or the amount of the inorganic filler is varied within the limits of the invention.

In general, the table 4 shows that the polymer composition of the invention is highly advantageous for DC cable, preferably for HV DC cable applications.


**Claims**

1.  A direct current (DC) power cable, comprising a conductor which is surrounded by at least an inner semiconductive layer, an insulation layer and an outer semiconductive layer, in that order, wherein at least the insulation layer, comprises, preferably consists of, a polymer composition comprising

    (a) a polyolefin,
    (b) an inorganic filler, and
    (c) a crosslinking agent,

    wherein said polyolefin (a) is an unsaturated LDPE.

2.  The power cable according to claim 1, wherein the polymer composition has an electrical conductivity of 110 fS/m or less when measured according to DC conductivity method (1)) using a 1 mm thick plaque sample as described under "Determination Methods, or

- wherein the polymer composition has an electrical conductivity of 0.05 to 15 fS/m when measured according to DC conductivity method (2).

3. The power cable according to any of the preceding claims, wherein the amount of polyolefin (a) in the polymer composition of the invention is typically of at least 35 wt% of the total weight of the polymer component(s) present in the polymer composition, more preferably the amount of the polyolefin (a) is of 70wt% or more, based on the combined amount of the polyolefin (a) and the inorganic filler (b).

4. The power cable according to any of the preceding claims, wherein the amount of the inorganic filler (b) is of up to 30wt%, based on the combined amount of the polyolefin (a) and the inorganic filler (b).

5. The power cable according to any of the preceding claims, wherein the polyolefin (a) is selected from an unsaturated LDPE homopolymer or an unsaturated LDPE copolymer of ethylene with one or more comonomer(s), comprising a total amount of carbon-carbon double bonds/1000 carbon atoms of more than 0.4/1000 carbon atoms.

6. The power cable according to any of the preceding claims, wherein the polyolefin (a) is an unsaturated LDPE copolymer of ethylene with at least one polyunsaturated comonomer and optionally with one or more other comonomer(s).

7. The power cable according to any of the preceding claims, wherein the polyolefin (a) is an unsaturated LDPE copolymer of ethylene with at least one polyunsaturated comonomer selected from $C_8$- to $C_{14}$-non-conjugated diene or mixtures thereof, more preferably selected from 1,7-octadiene, 1,9-decadiene, 1,11-dodecadiene, 1,13-tetradecadiene, 7-methyl-1,6-octadiene, 9-methyl-1,8-decadiene, or mixtures thereof, even more preferably from 1,7-octadiene, 1,9-decadiene, 1,11-dodecadiene, 1,13-tetradecadiene, or any mixture thereof.

8. The direct current (DC) power cable according to any preceding claim, wherein inorganic filler (b) is selected from inorganic oxides, hydroxides, carbonates, nitrides, carbides, kaolin clay, talc, borates, alumina, titania or titanates, silica, silicates, zirconia, glass fibers, glass particles, or any mixtures thereof.

9. The direct current (DC) power cable according to any preceding claim, wherein the inorganic filler (b) is selected from inorganic oxides, nitrides, carbides, kaolin clay, talc, borates, alumina, titania or titanates, silica, silicates, zirconia, glass fibers, glass particles, or any mixtures thereof, preferably the inorganic filler (b) is an inorganic oxide, more preferably an inorganic oxide selected from $SiO_2$, MgO, $TiO_2$ or ZnO, or any mixtures thereof, more preferably from $SiO_2$, $TiO_2$ or MgO, or any mixtures thereof.

10. The direct current (DC) power cable according to any preceding claim, wherein the crosslinking agent is a peroxide in an amount of up to 110 mmol -O-O-/kg polymer composition.

11. The direct current (DC) power cable according to any of the preceding claims, wherein the inner semiconductive layer comprises, preferably consists of, an optionally crosslinked first semiconductive composition, the polymer composition of the insulation layer comprises, preferably consists of, a crosslinked polymer composition according to any of the preceding claims 1-10, and the outer semiconductive layer comprises, preferably consists of, an optionally crosslinked second semiconductive composition.

12. A use of a polymer composition for producing an insulation layer of a direct current (DC) power cable as defined in any of claims 1 to 11, comprising a conductor surrounded by at least an inner semiconductive layer, the insulation layer and an outer semiconductive layer, in that order, **characterised in that** the polymer composition comprises

    (a) a polyolefin,
    (b) an inorganic filler, and
    (c) a crosslinking agent,

wherein said polyolefin is an unsaturated LDPE.

13. A process for producing a DC power cable according to any of claims 1 to 11, which is preferably crosslinkable, wherein the process comprises the steps of

    - applying on a conductor, preferably by (co)extrusion, an inner semiconductive layer comprising a first semiconductive composition, an insulation layer comprising an insulation composition and an outer semiconductive layer comprising a second semiconductive composition, in that order, wherein the insulation composition of the insulation layer comprises, preferably consists of, a polymer composition as defined in any of claims 1 to 11.

14. A polymer composition which is as defined in any of the preceding claims 2-4, 8 or 9 and wherein the polymer composition comprises

(a) a polyolefin which is an unsaturated LDPE,
(b) an inorganic filler, and
(c) a peroxide in an amount of 0.1 to 34 mmol -O-O-/kg polymer composition.

15. A cross-linked direct current (DC) power cable formed by crosslinking the direct current (DC) power cable as claimed in claim 1 to 11.

**Patentansprüche**

1. Gleichstrom(DC)-Stromkabel, das einen Leiter umfasst, der von zumindest einer inneren halbleitenden Schicht, einer Isolierschicht und einer äußeren halbleitenden Schicht in dieser Reihenfolge umgeben ist, wobei zumindest die Isolierschicht eine Polymerzusammensetzung umfasst, vorzugsweise aus dieser besteht, die Folgendes umfasst

(a) ein Polyolefin,
(b) einen anorganischen Füllstoff und
(c) ein Vernetzungsmittel,

wobei das Polyolefin (a) ein ungesättigtes LDPE ist.

2. Stromkabel nach Anspruch 1, wobei die Polymerzusammensetzung eine elektrische Leitfähigkeit von 110 fS/m oder weniger aufweist, wenn sie unter Verwendung einer 1 mm dicken Belagprobe gemäß einem DC-Leitfähigkeitsverfahren (1) wie es unter "Bestimmungsverfahren" beschrieben ist, gemessen wird, oder

- wobei die Polymerzusammensetzung eine elektrische Leitfähigkeit von 0,05 bis 15 fS/m aufweist, wenn sie gemäß einem DC-Leitfähigkeitsverfahren (2) gemessen wird.

3. Stromkabel nach einem der vorstehenden Ansprüche, wobei die Menge von Polyolefin (a) in der Polymerzusammensetzung der Erfindung typischerweise zumindest 35 Gew.-% des Gesamtgewichts der Polymerkomponente(n), die in der Polymerzusammensetzung vorliegt bzw. vorliegen, beträgt, bevorzugter die Menge des Polyolefins (a) 70 Gew.-% oder mehr beträgt, basierend auf der kombinierten Menge des Polyolefins (a) und des anorganischen Füllstoffs (b).

4. Stromkabel nach einem der vorstehenden Ansprüche, wobei die Menge des anorganischen Füllstoffs (b) bis zu 30 Gew.-% beträgt, basierend auf der kombinierten Menge des Polyolefins (a) und des anorganischen Füllstoffs (b).

5. Stromkabel nach einem der vorstehenden Ansprüche, wobei das Polyolefin (a) aus einem ungesättigten LDPE-Homopolymer oder einem ungesättigten LDPE-Copolymer aus Ethylen mit einem oder mehreren Comonomer(en) ausgewählt wird, das eine Gesamtmenge von Kohlenstoff-Kohlenstoff-Doppelbindungen/1000 Kohlenstoffatomen von mehr als 0,4/1000 Kohlenstoffatomen umfasst.

6. Stromkabel nach einem der vorstehenden Ansprüche, wobei das Polyolefin (a) ein ungesättigtes LDPE-Copolymer aus Ethylen mit zumindest einem mehrfach ungesättigten Comonomer und optional mit einem oder mehreren weiteren Comonomer(en) ist.

7. Stromkabel nach einem der vorstehenden Ansprüche, wobei das Polyolefin (a) ein ungesättigtes LDPE-Copolymer aus Ethylen mit zumindest einem mehrfach ungesättigten Comonomer ist, das aus $C_8$- bis $C_{14}$-nichtkonjugiertem Dien oder Mischungen desselben ausgewählt ist, bevorzugter aus 1,7-Oktadien, 1,9-Decadien, 1,11-Dodecadien, 1,13-Tetradecadien, 7-Methyl-1,6-Oktadien, 9-Methyl-1,8-Decadien oder Mischungen derselben, noch bevorzugter aus 1,7-Oktadien, 1,9-Decadien, 1,11-Dodecadien, 1,13-Tetradecadien oder beliebigen Mischungen derselben ausgewählt ist.

8. Gleichstrom(DC)-Stromkabel nach einem vorstehenden Anspruch, wobei der anorganische Füllstoff (b) aus anorganischen Oxiden, Hydroxiden, Carbonaten, Nitriden, Carbiden, kaolinitischem Ton, Talk, Boraten, Aluminiumoxid, Titandioxid oder Titanaten, Kieselsäure, Silicaten, Zirkoniumdioxid, Glasfasern, Glaspartikeln oder beliebigen Mischungen derselben ausgewählt ist.

9. Gleichstrom(DC)-Stromkabel nach einem vorstehenden Anspruch, wobei der anorganische Füllstoff (b) aus anorganischen Oxiden, Nitriden, Carbiden, kaolinitischem Ton, Talk, Boraten, Aluminiumoxid, Titandioxid oder Titanaten, Kieselsäure, Silicaten, Zirkoniumdioxid, Glasfasern, Glaspartikeln oder beliebigen Mischungen derselben ausgewählt ist, bevorzugter ist der anorganische Füllstoff (b) ein anorganisches Oxid, noch bevorzugter ein anorganisches Oxid, das aus $SiO_2$, MgO, $TiO_2$ oder ZnO oder beliebigen Mischungen derselben, noch bevorzugter aus $SiO_2$, $TiO_2$ oder MgO oder beliebigen Mischungen derselben, ausgewählt ist.

10. Gleichstrom(DC)-Stromkabel nach einem vorstehenden Anspruch, wobei das Vernetzungsmittel ein Peroxid in einer Menge von bis zu 110 mmol-O-O-/kg Polymerzusammensetzung ist.

11. Gleichstrom(DC)-Stromkabel nach einem der vorstehenden Ansprüche, wobei die innere halbleitende Schicht eine optional vernetzte erste halbleitende Zusammensetzung umfasst, bevorzugt aus dieser besteht, die Polymerzusammensetzung der Isolierschicht eine vernetzte Polymerzusammensetzung nach einem der vorstehenden Ansprüche 1 bis 10 umfasst, bevorzugt aus dieser besteht, und die äußere halbleitende Schicht eine optional vernetzte zweite halbleitende Zusammensetzung umfasst, bevorzugt aus dieser besteht.

12. Verwendung einer Polymerzusammensetzung zum Herstellen einer Isolierschicht eines wie in einem der Ansprüche 1 bis 11 definierten Gleichstrom(DC)-Stromkabels, das einen Leiter umfasst, der von zumindest einer inneren halbleitenden Schicht, der Isolierschicht und einer äußeren halbleitenden Schicht in dieser Reihenfolge umgeben ist, **dadurch gekennzeichnet, dass** die Polymerzusammensetzung Folgendes umfasst

(a) ein Polyolefin,
(b) einen anorganischen Füllstoff und
(c) ein Vernetzungsmittel,

wobei das Polyolefin (a) ein ungesättigtes LDPE ist.

13. Prozess zum Herstellen eines DC-Stromkabels nach einem der Ansprüche 1 bis 11, das bevorzugt vernetzbar ist, wobei der Prozess die folgenden Schritte umfasst

- Aufbringen auf einen Leiter, bevorzugt durch (Co)extrusion, in dieser Reihenfolge, einer inneren halbleitenden Schicht, die eine erste halbleitende Zusammensetzung umfasst, einer Isolierschicht, die eine Isolierzusammensetzung umfasst, und einer äußeren halbleitenden Schicht, die eine zweite halbleitende Zusammensetzung umfasst, wobei die Isolierzusammensetzung der Isolierschicht eine Polymerzusammensetzung, nach einem der Ansprüche 1 bis 11, umfasst, bevorzugt aus dieser besteht.

14. Polymerzusammensetzung, nach einem der vorstehenden Ansprüche 2-4, 8 oder 9 und wobei die Polymerzusammensetzung Folgendes umfasst

(a) ein Polyolefin, das ein ungesättigtes LDPE ist,
(b) einen anorganischen Füllstoff und
(c) ein Peroxid in einer Menge von 0,1 bis 34 mmol-O-O-/kg Polymerzusammensetzung.

15. Vernetztes Gleichstrom(DC)-Stromkabel, das durch ein Vernetzen des Gleichstrom(DC)-Stromkabels nach Anspruch 1 bis 11 gebildet wird.

**Revendications**

1. Câble d'alimentation en courant continu (CC), comprenant un conducteur qui est entouré d'au moins une couche semiconductrice interne, une couche isolante et une couche semiconductrice externe, dans cet ordre, dans lequel au moins la couche isolante comprend, de préférence consiste en, une composition polymère comprenant

(a) une polyoléfine,
(b) une charge inorganique, et
(c) un agent de réticulation,

dans lequel ladite polyoléfine (a) est un LDPE insaturé.

2. Câble d'alimentation selon la revendication 1, dans lequel la composition polymère a une conductivité électrique égale ou inférieure à 110 fS/m lorsqu'elle est mesurée selon un procédé de conductivité en CC (1) utilisant un échantillon de plaque de 1 mm d'épaisseur, comme décrit dans la section « Méthodes de détermination », ou

- dans lequel la composition polymère a une conductivité électrique de 0,05 à 15 fS/m lorsqu'elle est mesurée selon un procédé de conductivité en CC (2).

3. Câble d'alimentation selon l'une quelconque des revendications précédentes, dans lequel la quantité de polyoléfine (a) dans la composition polymère de l'invention est typiquement d'au moins 35 % en poids du poids total du ou des composants polymère(s) présents dans la composition polymère, de préférence la quantité de la polyoléfine (a) est égale ou supérieure à 70 % en poids, sur la base de la quantité combinée de la polyoléfine (a) et de la charge inorganique (b).

4. Câble d'alimentation selon l'une quelconque des revendications précédentes, dans lequel la quantité de charge inorganique (b) va jusqu'à 30 % en poids, sur la base de la quantité combinée de la polyoléfine (a) et de la charge inorganique (b).

5. Câble d'alimentation selon l'une quelconque des revendications précédentes, dans lequel la polyoléfine (a) est choisie parmi un homopolymère de LDPE insaturé ou un copolymère de LDPE insaturé d'éthylène avec un ou plusieurs comonomère(s), comprenant une quantité totale de doubles liaisons carbone-carbone/1000 atomes de carbone de plus de 0,4/1000 atomes de carbone.

6. Câble d'alimentation selon l'une quelconque des revendications précédentes, dans lequel la polyoléfine (a) est un copolymère de LDPE insaturé d'éthylène avec au moins un comonomère polyinsaturé et optionnellement avec un ou plusieurs autres comonomères.

7. Câble d'alimentation selon l'une quelconque des revendications précédentes, dans lequel la polyoléfine (a) est un copolymère de LDPE insaturé d'éthylène avec au moins un comonomère polyinsaturé choisi parmi un diène non conjugué en $C_8$ à $C_{14}$ ou des mélanges de ceux-ci, de préférence choisi parmi le 1,7-octadiène, le 1,9-décadiène, le 1,11-dodécadiène, le 1,13-tétradécadiène, le 7-méthyl-1,6-octadiène, le 9-méthyl-1,8-décadiène, ou des mélanges de ceux-ci, de préférence encore parmi le 1,7-octadiène, le 1,9-décadiène, le 1,11-dodécadiène, le 1,13-tétradécadiène, ou tout mélange de ceux-ci.

8. Câble d'alimentation à courant continu (CC) selon l'une quelconque des revendications précédentes, dans lequel la charge inorganique (b) est choisie parmi des oxydes inorganiques, des hydroxydes, des carbonates, des nitrures, des carbures, de l'argile de kaolin, du talc, des borates, de l'alumine, de l'oxyde de titane ou de titanates, de la silice, des silicates, de la zircone, des fibres de verre, des particules de verre ou tout mélange de ceux-ci.

9. Câble d'alimentation à courant continu (CC) selon l'une quelconque des revendications précédentes, dans lequel la charge inorganique (b) est choisie parmi des oxydes inorganiques, des nitrures, des carbures, de l'argile de kaolin, du talc, des borates, de l'alumine, de l'oxyde de titane ou des titanates, de la silice, des silicates, de la zircone, des fibres de verre, des particules de verre ou tout mélange de ceux-ci, de préférence la charge inorganique (b) est un oxyde inorganique, de manière plus préférée un oxyde inorganique choisi parmi $SiO_2$, $MgO$, $TiO_2$ ou $ZnO$, ou tout mélange de ceux-ci, de manière plus préférée de $SiO_2$, $TiO_2$ ou $MgO$, ou tout mélange de ceux-ci.

10. Câble d'alimentation à courant continu (CC) selon l'une quelconque des revendications précédentes, dans lequel l'agent de réticulation est un peroxyde en une quantité allant jusqu'à 110 mmol de -O-O-/kg de composition polymère.

11. Câble d'alimentation à courant continu (CC) selon l'une quelconque des revendications précédentes, dans lequel la couche semiconductrice interne comprend, de préférence consiste en, une première composition semiconductrice optionnellement réticulée, la composition polymère de la couche isolante comprend, de préférence consiste en, une composition polymère réticulée selon l'une quelconque des revendications précédentes 1 à 10, et la couche semi-conductrice externe comprend, de préférence consiste en, une seconde composition semi-conductrice optionnellement réticulée.

**12.** Utilisation d'une composition polymère pour la fabrication d'une couche isolante d'un câble d'alimentation en courant continu (CC) selon l'une quelconque des revendications 1 à 11, comprenant un conducteur entouré d'au moins une couche interne semi-conductrice, de la couche isolante et d'une couche semi-conductrice externe, dans cet ordre, **caractérisée en ce que** la composition polymère comprend

    (a) une polyoléfine,
    (b) une charge inorganique, et
    (c) un agent de réticulation,

dans laquelle ladite polyoléfine est un LDPE insaturé.

**13.** Procédé de fabrication d'un câble d'alimentation en CC selon l'une quelconque des revendications 1 à 11, qui est de préférence réticulable, dans lequel le procédé comprend les étapes consistant à

    - appliquer sur un conducteur, de préférence par (co)extrusion, une couche interne semi-conductrice comprenant une première composition semi-conductrice, une couche isolante comprenant une composition isolante et une couche externe semi-conductrice comprenant une seconde composition semi-conductrice, dans cet ordre, dans lequel la composition isolante de la couche isolante comprend, de préférence consiste en, une composition polymère telle que définie dans l'une quelconque des revendications 1 à 11.

**14.** Composition polymère qui est telle que définie dans l'une quelconque des revendications précédentes 2 à 4, 8 ou 9 et dans laquelle la composition polymère comprend

    (a) une polyoléfine qui est un LDPE insaturé,
    (b) une charge inorganique, et
    (c) un peroxyde en une quantité de 0,1 à 34 mmol de -O-O-/kg de composition polymère.

**15.** Câble d'alimentation à courant continu (CC) réticulé formé par réticulation du câble d'alimentation à courant continu (CC) selon l'une des revendications 1 à 11.

# EP 2 558 523 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006081400 A
- JP 7021850 A
- JP 2006291022 A
- WO 2006089744 A
- WO 9308222 A
- WO 9635732 A

### Non-patent literature cited in the description

- Encyclopedia of Polymer Science and Engineering. 1986, vol. 6, 383-410
- Polyethylene: High-pressure. Encyclopedia of Materials: Science and Technology. Elsevier Science Ltd, 2001, 7181-7184
- **J. RANDALL JMS.** *Rev. Macromol. Chem. Phys.,* 1989, vol. C29 (2&3), 201-317
- **A. J. BRANDOLINI ; D. D. HILLS.** NMR Spectra of Polymers and Polymer Additives. Marcel Dekker, Inc, 2000
- **S. BERGER ; S. BRAUN.** 200 and More NMR Experiments: A Practical Course. Wiley-VCH, 2004
- **OLSSON et al.** Experimental determination of DC conductivity for XLPE insulation. *Nordic Insulation Symposium 2009 (Nord-IS 09),* 15 June 2009, 55-58
- *CHEMICAL ABSTRACTS,* 123-38-6
- *CHEMICAL ABSTRACTS,* 100 402-78-6
- *CHEMICAL ABSTRACTS,* 1309-48-4
- *CHEMICAL ABSTRACTS,* 80-43-3
- *CHEMICAL ABSTRACTS,* 96-69-5
- *CHEMICAL ABSTRACTS,* 6362-80-7